# EUROPEAN PATENT APPLICATION

(11) **EP 4 696 736 A1**
(43) Date of publication of application: **18.02.2026**
(21) Application number: 24788627.8
(22) Date of filing: 02.04.2024
(51) Int. Cl.: C08G 73/10, C09D 7/20, C09D 179/08

(54) **POLYIMIDE RESIN PRECURSOR, POLYIMIDE RESIN, AND POLYIMIDE FILM**

(30) Priority: 14.04.2023 JP 2023066435; 01.12.2023 JP 2023203858
(71) Applicant: MITSUBISHI GAS CHEMICAL COMPANY, INC., Chiyoda-ku Tokyo 100-8324 (JP)
(72) Inventor: ABIKO Yohei, Hiratsuka-shi, Kanagawa 254-0016 (JP); YONEHAMA Shinichi, Hiratsuka-shi, Kanagawa 254-0016 (JP)
(74) Representative: Hoffmann Eitle
(86) International application number: PCT/JP2024/013675
(87) International publication number: WO 2024/214600

(57) **Abstract**

Disclosed is a polyimide resin precursor containing: a structural unit A derived from a tetracarboxylic dianhydride; and a structural unit B derived from a diamine, in which the structural unit A includes a structural unit (A1) derived from a compound represented by Formula (a1) described below, and the structural unit B includes at least one selected from the group consisting of a structural unit (B1) derived from a compound represented by Formula (b1) described below, a structural unit (B2) derived from a compound represented by Formula (b2) described below, and a structural unit (B3) derived from a compound represented by Formula (b3) described below.

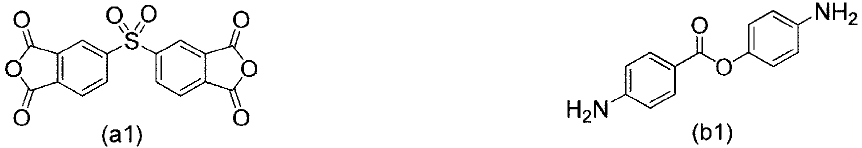

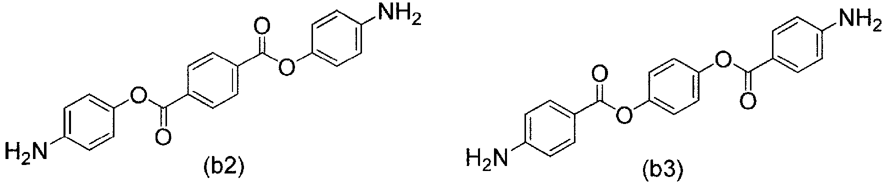

## Description

### Technical Field

The present invention relates to a polyimide resin precursor, a polyimide resin, and a polyimide film.

### Background Art

Since a polyimide resin has excellent thermal resistance and mechanical properties, various uses of the polyimide resin in the fields of electrical and electronic components and the like have been studied.

For example, among the electrical and electronic components, a polyimide resin having thermal resistance and transparency is used in a display field. In the display field, glass is generally used as a supporting substrate.

For example, Patent Document 1 discloses a polyimide precursor having a structure in which a repeating unit is derived from 4-aminophenyl-4-aminobenzoate, for the purpose of obtaining a polyimide film having improved thermal resistance, coefficient of linear thermal expansion, and light transmittance and improved adhesion between the polyimide film and a laminate of a glass substrate.

### Citation List

### Patent Document

Patent Document 1: JP 7235157 B

### Summary of Invention

### Technical Problem

The polyimide resin is used not only in the display field but also used as a material of an insulating film in a semiconductor field. The polyimide resin used in the semiconductor field is required to have not only thermal resistance but also adhesion to a supporting substrate, such as silicon, silicon nitride and silicon oxide. However, as compared with glass used in the display field, silicon has less functional groups on the surface and has low adhesion to a resin, and the polyimide resin is required to have higher adhesion. In addition, as compared with a display, in a semiconductor, high-temperature treatment affects the supporting substrate depending on a configuration of a device; therefore, it is necessary to perform a curing reaction at a lower temperature, and it is necessary to exhibit adhesion even at a lower temperature.

In the semiconductor field, since a spin coating method is mainly used as a method for applying a resin varnish, it is necessary to remove the varnish that has reached an outer peripheral portion and a back surface of a silicon wafer. However, in general, a polyimide resin or a polyimide resin precursor (polyamic acid) is hardly dissolved in a rinse solution (propylene glycol monomethyl ether, cyclohexanone, and the like) used for removing a varnish. Thus, there is a demand for a polyimide resin precursor varnish that has excellent solubility in the rinse solution, that is, excellent coatability.

The present invention has been made in view of such a situation, and an object of the present invention is to provide a polyimide resin precursor which can provide a polyimide resin having excellent thermal resistance and adhesion and has excellent coatability. Another object of the present invention is to provide a polyimide resin and a polyimide film that have excellent thermal resistance and adhesion.

### Solution to Problem

The present inventors have found that a polyimide resin precursor having specific structural units, a polyimide film obtained using the precursor, and a polyimide resin can solve the above problems, and have completed the present invention.

That is, the present invention relates to the following [1] to [15].
[1] A polyimide resin precursor containing: a structural unit A derived from a tetracarboxylic dianhydride; and a structural unit B derived from a diamine, in which the structural unit A includes a structural unit (A1) derived from a compound represented by Formula (a1) described below, and the structural unit B includes at least one selected from the group consisting of a structural unit (B1) derived from a compound represented by Formula (b1) described below, a structural unit (B2) derived from a compound represented by Formula (b2) described below, and a structural unit (B3) derived from a compound represented by Formula (b3) described below. 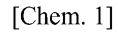 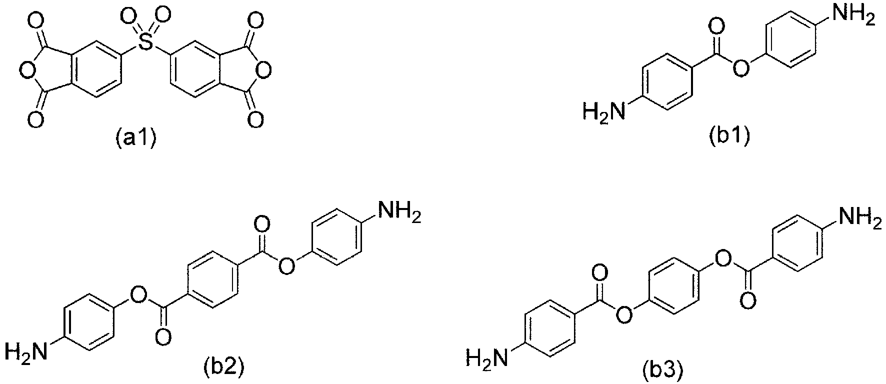
[2] The polyimide resin precursor according to [1], in which a proportion of the structural unit (A1) in the structural unit A is from 30 to 100 mol%.
[3] The polyimide resin precursor according to [1] or [2], in which a total of a proportion of the structural unit (B1), a proportion of the structural unit (B2), and a proportion of the structural unit (B3) in the structural unit B is from 30 to 100 mol%.
[4] The polyimide resin precursor according to any one of [1] to [3], in which the polyimide resin precursor is a polyamic acid.
[5] The polyimide resin precursor according to any one of [1] to [4],in which the structural unit A further includes at least one selected from the group consisting of a structural unit (A3) derived from a compound represented by Formula (a3) described below and a structural unit (A4) derived from a compound represented by Formula (a4) described below. 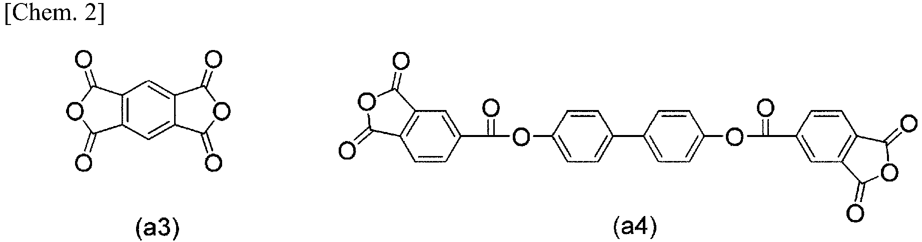
[6] The polyimide resin precursor according to any one of [1] to [5], in which a molar ratio [(A1)/((A3) + (A4))] of the structural unit (A1) and a total of the structural unit (A3) and the structural unit (A4) in the structural unit A is from 30/70 to 100/0.
[7] A varnish containing: the polyimide resin precursor described in any one of [1] to [6]; and an organic solvent.
[8] The varnish according to [7], in which the organic solvent includes at least one selected from the group consisting of 1,3-dimethyl-2-imidazolidinone, N-methyl-2-pyrrolidone, and γ-butyrolactone.
[9] A polyimide film obtained by applying the varnish described in [7] or [8] onto a support and heating the varnish.
[10] A polyimide resin containing: a structural unit AI derived from a tetracarboxylic dianhydride; and a structural unit BI derived from a diamine, in which the structural unit AI includes a structural unit (AI1) derived from a compound represented by Formula (a1) described below, and the structural unit BI includes at least one selected from the group consisting of a structural unit (BI1) derived from a compound represented by Formula (b1) described below, a structural unit (BI2) derived from a compound represented by Formula (b2) described below, and a structural unit (BI3) derived from a compound represented by Formula (b3) described below. 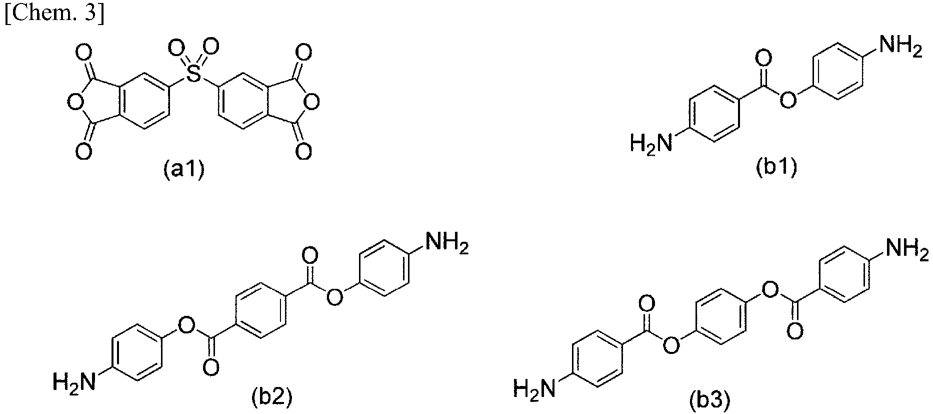
[11] The polyimide resin according to [10], in which a proportion of the structural unit (AI1) in the structural unit AI is from 30 to 100 mol%.
[12] The polyimide resin according to [10] or [11], in which a total of a proportion of the structural unit (BI1), a proportion of the structural unit (BI2), and a proportion of the structural unit (BI3) in the structural unit BI is from 30 to 100 mol%.
[13] The polyimide resin according to any one of [10] to [12], in which the structural unit AI further includes at least one selected from the group consisting of a structural unit (AI3) derived from a compound represented by Formula (a3) described below and a structural unit (AI4) derived from a compound represented by Formula (a4) described below. 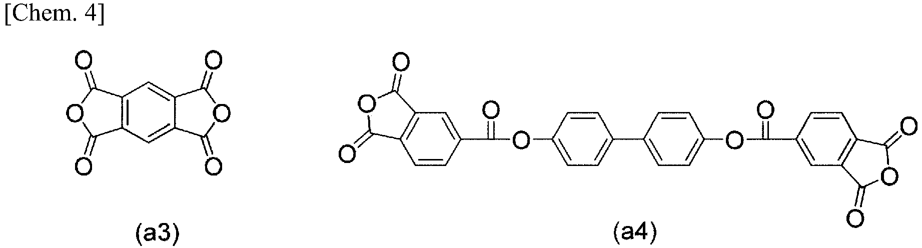
[14] The polyimide resin according to any one of [10] to [13], in which a molar ratio [(AI1)/((AI3) + (AI4))] of the structural unit (AI1) and a total of the structural unit (AI3) and the structural unit (AI4) in the structural unit AI is from 30/70 to 100/0.
[15] A polyimide film made of the polyimide resin described in any one of [10] to [14].

### Advantageous Effects of Invention

According to the present invention, it is possible to provide a polyimide resin precursor which can provide a polyimide resin having excellent thermal resistance and adhesion and has excellent coatability. In addition, it is possible to provide a polyimide resin and a polyimide film that have excellent thermal resistance and adhesion. The polyimide resin precursor of the present invention has the properties as described above and is therefore useful as a raw material in the semiconductor field.

### Description of Embodiments

### [Polyimide resin precursor]

The polyimide resin precursor of the present invention is a polyimide resin precursor having a structural unit A derived from a tetracarboxylic dianhydride and a structural unit B derived from a diamine, in which the structural unit A includes a structural unit (A1) derived from a compound represented by Formula (a1) described below, and the structural unit B includes at least one selected from the group consisting of a structural unit (B1) derived from a compound represented by Formula (b1) described below, a structural unit (B2) derived from a compound represented by Formula (b2) described below, and a structural unit (B3) derived from a compound represented by Formula (b3) described below.

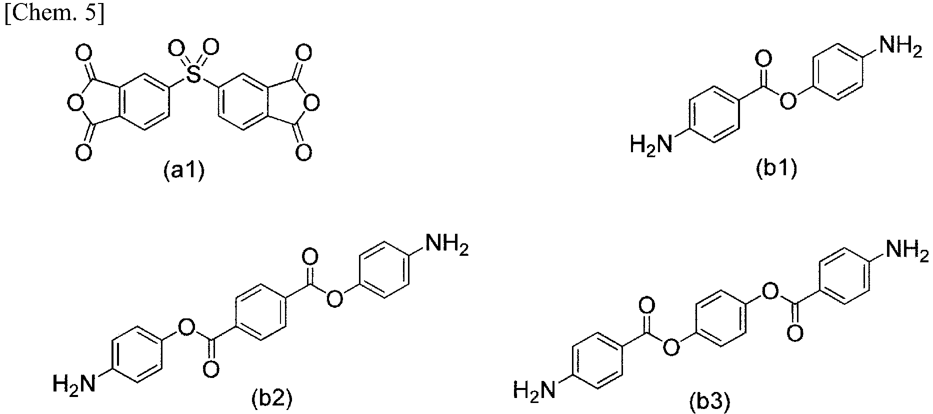

The reason why the polyimide resin precursor of the present invention is excellent in coatability and a polyimide resin having excellent thermal resistance and adhesion can be obtained by using the polyimide resin precursor of the present invention is not clear, and is considered as follows.

It is considered that the polyimide resin precursor of the present invention has a structure derived from a specific tetracarboxylic dianhydride component having a substituent with a large steric hindrance and having a flexible site, and has a structure derived from a specific diamine having an ester skeleton having high linearity and exhibiting relatively low water absorption, so that the resin obtained after thermal imidization has excellent thermal resistance while improving solubility of a polyimide precursor. In addition, it is considered that since the polyimide resin precursor of the present invention has the above structure, the resulting resin hardly absorbs moisture that inhibits adhesion. As described above, it is considered that the polyimide resin precursor of the present invention can provide a polyimide resin having excellent thermal resistance and adhesion and has excellent coatability.

### <Structural unit A>

The structural unit A is a structural unit derived from tetracarboxylic dianhydride in the polyimide resin precursor.

The structural unit A includes a structural unit (A1) derived from a compound represented by Formula (a1) described below.

When the structural unit A includes the structural unit (A1), the coatability of the varnish and the adhesion of the polyimide resin can be improved.

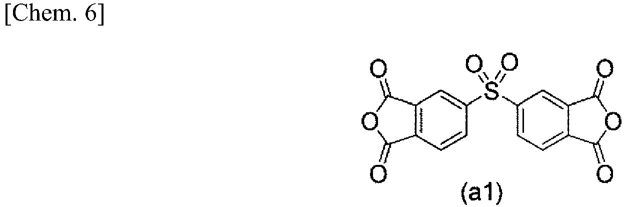

The compound represented by Formula (a1) is 3,3',4,4'-diphenylsulfonetetracarboxylic dianhydride (DSDA). When the structural unit A includes the structural unit (A1), the thermal resistance of the resulting polyimide resin is excellent, and the coatability of the varnish and the adhesion of the polyimide resin can also be improved.

The proportion of the structural unit (A1) in the structural unit A is preferably from 30 to 100 mol, more preferably from 70 to 100 mol, still more preferably from 90 to 100 mol, even more preferably from 95 to 100 mol, and may be 100 mol, and the structural unit A may include only the structural unit (A1).

When the proportion of the structural unit (A1) is within the above range, the thermal resistance of the resulting polyimide resin is excellent, and the coatability of the varnish and the adhesion of the polyimide resin can also be improved.

The structural unit A may include only the structural unit (A1) or may include a structural unit other than the structural unit (A1), and as the structural unit other than the structural unit (A1), the structural unit A preferably further includes at least one selected from the group consisting of a structural unit (A3) derived from a compound represented by Formula (a3) described below and a structural unit (A4) derived from a compound represented by Formula (a4) described below, and more preferably includes a structural unit (A3) derived from a compound represented by Formula (a3) described below.

That is, the structural unit A includes at least one selected from the group consisting of the structural unit (A3) derived from the compound represented by Formula (a3) and the structural unit (A4) derived from the compound represented by Formula (a4), and the structural unit (A1) derived from the compound represented by Formula (a1), or includes only the structural unit (A1).

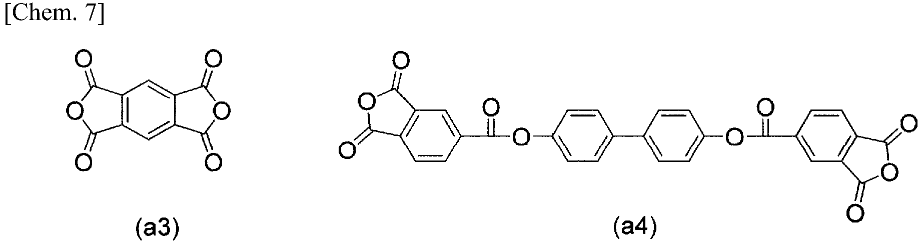

The compound represented by Formula (a3) is pyromellitic dianhydride (PMDA). When the structural unit A includes the structural unit (A3), the thermal resistance of the polyimide resin can be enhanced while the coatability of the varnish and the adhesion of the polyimide resin are maintained well.

The compound represented by Formula (a4) is 4,4-bis(1,3-dioxo-1,3-dihydroisobenzofuran-5-ylcarbonyloxy)biphenyl (BP-TME). When the structural unit A includes the structural unit (A4), the thermal resistance of the polyimide resin can be enhanced while the coatability of the varnish and the adhesion of the polyimide resin are maintained well.

A molar ratio [(A1)/((A3) + (A4))] of the structural unit (A1) and a total of the structural unit (A3) and the structural unit (A4) in the structural unit A is preferably from 30/70 to 100/0, more preferably from 40/60 to 100/0, still more preferably from 50/50 to 100/0, even more preferably from 60/40 to 100/0, further more preferably from 60/40 to 90/10, and still further more preferably from 60/40 to 80/20. When the molar ratio of the structural unit (A1) and the total of the structural unit (A3) and the structural unit (A4) is 100/0, the structural unit A does not include the structural unit (A3) and the structural unit (A4).

A molar ratio [(A1)/(A3)] of the structural unit (A1) to the structural unit (A3) in the structural unit A is preferably from 30/70 to 100/0, more preferably from 40/60 to 100/0, still more preferably from 40/60 to 90/10, even more preferably from 40/60 to 80/20, further more preferably from 40/60 to 70/30, and still further more preferably from 40/60 to 60/40. When the molar ratio of the structural unit (A1) to the structural unit (A3) is 100/0, the structural unit A does not include the structural unit (A3).

When the molar ratio of the structural unit included in the structural unit A is as described above, the thermal resistance of the polyimide resin can be enhanced while the coatability of the varnish and the adhesion of the polyimide resin are maintained well.

The structural unit A may include a structural unit other than the structural unit (A1), the structural unit (A3), and the structural unit (A4). The tetracarboxylic dianhydride that provides such a structural unit is not particularly limited, and examples thereof include aromatic tetracarboxylic dianhydrides, alicyclic tetracarboxylic dianhydrides, and aliphatic tetracarboxylic dianhydrides, excluding the compound represented by Formula (a1), excluding the compound represented by Formula (a3), and excluding the compound represented by Formula (a4). When the structural unit A includes a structural unit other than the structural unit (A1), the structural unit (A3) and the structural unit (A4), it is preferable to include an aromatic tetracarboxylic dianhydride among tetracarboxylic dianhydrides excluding the compound represented by Formula (a1), excluding the compound represented by Formula (a3), and excluding the compound represented by Formula (a4).

Examples of the aromatic tetracarboxylic dianhydride include 9,9-bis[4-(3,4-dicarboxyphenoxy)phenyl]fluorene dianhydride (BPF-PA), 2,3,6,7-naphthalenetetracarboxylic 2,3:6,7-dianhydride (NTCDA), 3,3', 4,4'-benzophenone tetracarboxylic dianhydride (BTDA), 9,9-bis(trifluoromethyl)-9H-xanthene-2,3,6,7-tetracarboxylic dianhydride (6FCDA), 2,2-bis[4-(3,4-dicarboxyphenoxy)phenyl]hexafluoropropane dianhydride, 4,4'-oxydiphthalic anhydride (ODPA), 2,2-bis(3,4-dicarboxyphenyl)-propane dianhydride, 3,3', 4,4'-biphenyltetracarboxylic dianhydride (s-BPDA), 2,3,3',4'-biphenyltetracarboxylic dianhydride (a-BPDA), 9,9'-bis(3,4-dicarboxyphenyl)fluorene dianhydride (BPAF), hydroquinone diphthalic anhydride (HQDEA), ethylene glycol bis(trimellitate) dianhydride (TMEG), and p-phenylene bis(trimellitate) dianhydride (TAHQ), and 3,3', 4,4'-benzophenone tetracarboxylic dianhydride (BTDA) is preferable.

Examples of the alicyclic tetracarboxylic dianhydride include cyclohexane-1,2,4,5-tetracarboxylic dianhydride (HPMDA), cyclohexane-1,2,3,4-tetracarboxylic dianhydride, norbornane-2-spiro-α-cyclopentanone-α'-spiro -2"-norbornane-5,5',6,6'-tetracarboxylic dianhydride (CpODA), 1,2,3,4-cyclobutanetetracarboxylic dianhydride, 1,2,3,4-tetramethyl-1, 2,3,4-cyclobutanetetracarboxylic dianhydride, 1,2,3,4-cyclopentanetetracarboxylic dianhydride, 1,2,4,5-cyclopentanetetracarboxylic dianhydride, 3,3', 4,4'-bicyclohexyltetracarboxylic dianhydride, 2,2-propylidene-4,4'-bis(cyclohexane-1,2-dicarboxylic acid) dianhydride, oxy-4,4'-bis(cyclohexane-1,2-dicarboxylic acid) dianhydride, bicyclo[2.2.2]oct-7-ene-2,3,5,6-tetracarboxylic dianhydride, and bicyclo[4.4.0]decane-2,3,6,7-tetracarboxylic dianhydride.

Examples of the aliphatic tetracarboxylic dianhydride include 1,2,3,4-butanetetracarboxylic dianhydride.

Note that, in the present specification, the term "aromatic tetracarboxylic dianhydride" refers to a tetracarboxylic dianhydride including one or more aromatic rings, the term "alicyclic tetracarboxylic dianhydride" refers to a tetracarboxylic dianhydride including one or more alicyclic rings and including no aromatic ring, and "aliphatic tetracarboxylic dianhydride" refers to a tetracarboxylic dianhydride including no aromatic ring and no alicyclic ring.

The structural unit optionally included in the structural unit A may be of one type or two or more types.

### <Structural unit B>

The structural unit B is a structural unit derived from a diamine in the polyimide resin precursor.

The structural unit B includes at least one selected from the group consisting of a structural unit (B1) derived from a compound represented by Formula (b1) described below, a structural unit (B2) derived from a compound represented by Formula (b2) described below, and a structural unit (B3) derived from a compound represented by Formula (b3) described below.

When the structural unit B includes one or more of the structural unit (B1), the structural unit (B2), and the structural unit (B3), the coatability of the varnish and the adhesion of the polyimide resin can be improved.

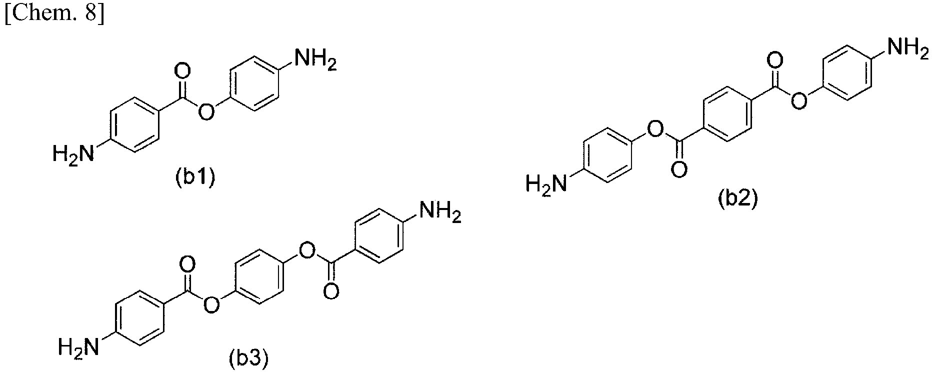

The compound represented by Formula (b1) is 4-aminophenyl-4-aminobenzoate (4-BAAB). When the structural unit B includes the structural unit (B1), the thermal resistance of the resulting polyimide resin is excellent, and the coatability of the varnish and the adhesion of the polyimide resin can also be improved.

The compound represented by Formula (b2) is bis(4-aminophenyl)terephthalate (APTP). When the structural unit B includes the structural unit (B2), the thermal resistance of the resulting polyimide resin is excellent, and the adhesion of the polyimide resin can also be improved.

The compound represented by Formula (b3) is 1,4-bis(4-aminobenzoyloxy)benzene. When the structural unit B includes the structural unit (B3), the thermal resistance of the resulting polyimide resin is excellent, and the adhesion of the polyimide resin can also be improved.

The structural unit B includes at least one selected from the group consisting of the structural unit (B1), the structural unit (B2), and the structural unit (B3), preferably includes at least one selected from the group consisting of the structural unit (B1) and the structural unit (B2), and more preferably includes the structural unit (B1).

A total of a proportion of the structural unit (B1), a proportion of the structural unit (B2), and a proportion of the structural unit (B3) in the structural unit B is preferably from 30 to 100 mol, more preferably from 70 to 100 mol, still more preferably from 90 to 100 mol, even more preferably from 95 to 100 mol, and may be 100 mol, and the structural unit B may include only at least one selected from the group consisting of the structural unit (B1), the structural unit (B2), and the structural unit (B3).

The proportion of the structural unit (B1) in the structural unit B is preferably from 30 to 100 mol, more preferably from 70 to 100 mol, still more preferably from 90 to 100 mol, even more preferably from 95 to 100 mol, and may be 100 mol, and the structural unit B may include only the structural unit (B1).

The proportion of the structural unit (B2) in the structural unit B is preferably from 30 to 100 mol, more preferably from 70 to 100 mol, still more preferably from 90 to 100 mol, even more preferably from 95 to 100 mol, and may be 100 mol, and the structural unit B may include only the structural unit (B2).

The proportion of the structural unit (B3) in the structural unit B is preferably from 30 to 100 mol, more preferably from 70 to 100 mol, still more preferably from 90 to 100 mol, even more preferably from 95 to 100 mol, and may be 100 mol, and the structural unit B may include only the structural unit (B3).

When the proportions of the structural unit (B1), the structural unit (B2), and the structural unit (B3) are within the above ranges, the thermal resistance of the resulting polyimide resin is excellent, and the coatability of the varnish and the adhesion of the polyimide resin can also be improved.

The structural unit B may include a structural unit other than the structural unit (B1), the structural unit (B2), and the structural unit (B3). The diamine that provides such a structural unit is not particularly limited, and examples thereof include aromatic diamines, aliphatic diamines, and alicyclic diamines excluding any of the compound represented by Formula (b1), the compound represented by Formula (b2), and the compound represented by Formula (b3).

Examples of the aromatic diamine include 2,2'-bis(trifluoromethyl)-4,4'-diaminodiphenyl ether (6FODA), 2,2'-bis(trifluoromethyl)-4,4'-diaminobiphenyl (2,2'-TFMB), 3,3'-bis(trifluoromethyl)-4,4'-diaminobiphenyl, 2,2'-bis(trifluoromethyl)-5,5'-diaminobiphenyl, 2,2-bis(4-aminophenyl)hexafluoropropane (HFDA), 2,2-bis(3-amino-4-methylphenyl)hexafluoropropane, 2,2-bis[4-(4-aminophenoxy)phenyl]hexafluoropropane (HFBAPP), 4,4'-diaminodiphenyl ether (4,4'-ODA), 3,4'-diaminodiphenyl ether, 4,4'-diaminodiphenyl methane (DDM), 4,4'-diaminodiphenyl sulfone (4,4'-DDS), 3,3'-diaminodiphenyl sulfone (3,3'-DDS), 4,4'-diamino-2,2'-dimethylbiphenyl (mTB), 9,9-bis(4-aminophenyl)fluorene (BAFL), 4,4'-diaminobiphenyl (benzidine), 4,4'-diamino-3,3'-dimethylbiphenyl, 4,4'-diaminodiphenyl sulfide, 4,4'-diaminobenzophenone, 2,2-bis(3-aminophenyl)propane, 2,2-bis(4-aminophenyl)propane, 5-amino-1,3,3-trimethyl-1-(4-aminophenyl)-indane (5-TMDM), 6-amino-1,3,3-trimethyl-1-(4-aminophenyl)-indane (6-TMDM), 1,3-bis(3-amino-α,α-dimethylbenzyl)benzene, 1,3-bis(4-amino-α,α-dimethylbenzyl)benzene (BisAM), 1,4-bis(4-amino-α,α-dimethylbenzyl)benzene (BisAP), 4,4'-bis(3-aminophenoxy)biphenyl, 4,4'-bis(4-aminophenoxy)biphenyl (BODA), 1,1-bis[4-(4-aminophenoxy)phenyl]cyclohexane, 2,2-bis[4-(4-aminophenoxy)phenyl]propane (BAPP), 1,4-bis(3-aminophenoxy)benzene, 1,4-bis(4-aminophenoxy)benzene, 1,3-bis(3-aminophenoxy)benzene, 1,3-bis(4-aminophenoxy)benzene, bis[4-(3-aminophenoxy)phenyl]ketone, bis[4-(4-aminophenoxy)phenyl]ketone, bis[4-(3-aminophenoxy)phenyl]sulfide, bis[4-(4-aminophenoxy)phenyl]sulfide, bis[4-(3-aminophenoxy)phenyl]ether, bis[4-(4-aminophenoxy)phenyl]ether, bis[4-(3-aminophenoxy)phenyl]sulfone, bis[4-(4-aminophenoxy)phenyl]sulfone, 4,4-diaminobenzanilide, 4-aminobenzoic acid-4-aminophenyl, and 3,4-diaminobenzanilide.

Examples of the alicyclic diamine include 1,3-bis(aminomethyl)cyclohexane (1,3-BAC), 1,4-bis(aminomethyl)cyclohexane, 1,3-cyclohexyldiamine, 1,4-cyclohexyldiamine, isophorone diamine, bis(aminomethyl)norbornane, 4,4'-diaminodicyclohexylmethane, 4,4'-diaminodicyclohexyl ether, and 2,2-bis(4-aminocyclohexyl)propane.

Examples of the aliphatic diamine include ethylenediamine and hexamethylenediamine.

Note that, in the present specification, the term "aromatic diamine" refers to a diamine including one or more aromatic rings, the term "alicyclic diamine" refers to a diamine including one or more alicyclic rings and including no aromatic ring, and the term "aliphatic diamine" refers to a diamine including no aromatic ring and no alicyclic ring.

The structural unit optionally included in the structural unit B, other than the structural unit (B1), the structural unit (B2), and the structural unit (B3) may be of one type or two or more types.

### <Characteristics of polyimide resin precursor>

The number average molecular weight of the polyimide resin precursor is preferably from 5000 to 500000 from the viewpoint of mechanical strength of the resulting polyimide film. The weight average molecular weight (Mw) is preferably from 10000 to 800000 and more preferably from 30000 to 300000 from the same viewpoint. The number average molecular weight and the weight average molecular weight of the polyimide resin precursor can be determined in terms of standard polymethyl methacrylate (PMMA) by gel filtration chromatography measurement.

The polyimide resin precursor of the present invention is preferably a polyimide resin precursor having a polyamic acid structure, and more preferably a polyamic acid.

### <Method for producing polyimide resin precursor>

The polyimide resin precursor may be produced by any method, and is preferably produced by the following production method.

As described above, the polyimide resin precursor is preferably produced by a production method in which a polyimide resin precursor having a polyamic acid structure is obtained by reacting a compound (tetracarboxylic acid component) that provides the structural unit A mentioned above with a compound (diamine component) that provides the structural unit B mentioned above.

More specifically, a preferred method for producing a polyimide resin precursor is a production method for obtaining a polyimide resin precursor having a polyamic acid structure by reacting a tetracarboxylic acid component including a compound represented by Formula (a1) with a diamine component including at least one selected from the group consisting of a compound represented by Formula (b1), a compound represented by Formula (b2), and a compound represented by Formula (b3).

The tetracarboxylic acid component used in the present production method includes a compound that provides the structural unit (A1), and may include a tetracarboxylic acid component other than the compound that provides the structural unit (A1) as long as the effect of the present invention is not impaired.

The diamine component used in the present production method preferably includes at least one selected from the group consisting of a compound that provides the structural unit (B1), a compound that provides the structural unit (B2), and a compound that provides the structural unit (B3), and may include a diamine component other than the compound that provides the structural unit (B1), the compound that provides the structural unit (B2), and the compound that provides the structural unit (B3) as long as the effects of the present invention are not impaired.

The amount of the diamine component based on the tetracarboxylic acid component is preferably from 0.9 to 1.1 mol.

The method of reacting the tetracarboxylic acid component with the diamine component in the present production method is not particularly limited, and a known method can be used.

Specific examples of the reaction method include a method in which a tetracarboxylic acid component, a diamine component, a solvent, and if necessary, an end-capping agent are charged into a reactor, and stirred at preferably from 0°C to 120°C, more preferably from 5°C to 80°C for 1 to 72 hours.

When carrying out the reaction at 80°C or lower, the molecular weight of the polyimide resin precursor does not vary depending on a temperature history during polymerization, and the progress of thermal imidization can also be suppressed, so that the polyimide resin precursor having the polyamic acid structure can be stably produced.

By the above method, a polyimide resin precursor solution having a polyamic acid structure dissolved in a solvent is obtained.

The concentration of the polyimide resin precursor in the resulting solution is preferably from 1 to 50 mass%, more preferably from 3 to 35 mass%, and still more preferably from 5 to 30 mass%.

Next, raw materials and the like used in the present production method will be described.

### [Tetracarboxylic acid component]

The tetracarboxylic acid component used as a raw material in the present production method is preferably the tetracarboxylic dianhydride described in the section <Structural unit (A)> above. The tetracarboxylic dianhydride used as the tetracarboxylic acid component in the present production method may be in any form of a dianhydride, a tetracarboxylic acid (free acid), and an alkyl ester of a tetracarboxylic acid, and is preferably a dianhydride.

The tetracarboxylic acid component used as a raw material in the present production method includes a compound represented by Formula (a1) (compound that provides the structural unit (A1)).

A proportion of the compound represented by Formula (a1) in the tetracarboxylic acid component is preferably from 30 to 100 mol, more preferably from 70 to 100 mol, still more preferably from 90 to 100 mol, even more preferably from 95 to 100 mol, and may be 100 mol, and the tetracarboxylic acid component may include only the compound represented by Formula (a1).

When the proportion of the compound represented by Formula (a1) is within the above range, the thermal resistance of the resulting polyimide resin is excellent, and the coatability of the precursor varnish and the adhesion of the polyimide resin can also be improved.

The tetracarboxylic acid component may include only the compound represented by Formula (a1), or may include a tetracarboxylic acid component other than the compound represented by Formula (a1), as the tetracarboxylic acid component other than the compound represented by Formula (a1), at least one selected from the group consisting of a compound represented by Formula (a3) described below and a compound represented by Formula (a4) described below is preferably further included, and the compound represented by Formula (a3) described below is more preferably included.

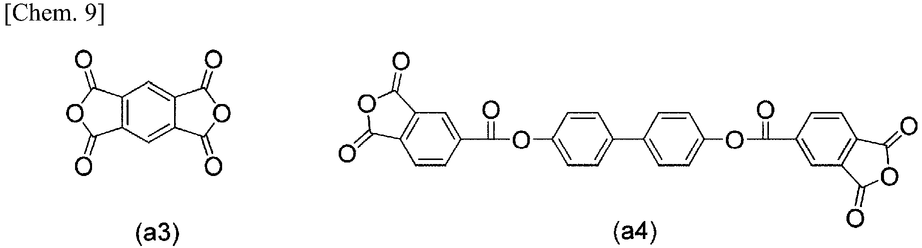

The compound represented by Formula (a3) is pyromellitic dianhydride (PMDA). When the tetracarboxylic acid component includes the compound represented by Formula (a3), the thermal resistance of the resulting polyimide resin can be enhanced while the coatability of the resulting varnish and the adhesion of the polyimide resin are maintained well.

The compound represented by Formula (a4) is 4,4-bis(1,3-dioxo-1,3-dihydroisobenzofuran-5-ylcarbonyloxy)biphenyl (BP-TME). When the tetracarboxylic acid component includes the compound represented by Formula (a4), the thermal resistance of the resulting polyimide resin can be enhanced while the coatability of the resulting varnish and the adhesion of the polyimide resin are maintained well.

A molar ratio [(a1)/((a3) + (a4))] of the compound represented by Formula (a1) and a total of the compound represented by Formula (a3) and the compound represented by Formula (a4) in the structural unit A is preferably from 30/70 to 100/0, more preferably from 40/60 to 100/0, still more preferably from 50/50 to 100/0, even more preferably from 60/40 to 100/0, further more preferably from 60/40 to 90/10, and still further more preferably from 60/40 to 80/20. When the molar ratio of the compound represented by Formula (a1) and the total of the compound represented by Formula (a3) and the compound represented by Formula (a4) is 100/0, the tetracarboxylic acid component does not include the compound represented by Formula (a3) and the compound represented by Formula (a4).

A molar ratio [(a1)/(a3)] of the compound represented by Formula (a1) to the compound represented by Formula (a3) in the tetracarboxylic acid component is preferably from 30/70 to 100/0, more preferably from 40/60 to 100/0, still more preferably from 40/60 to 90/10, even more preferably from 40/60 to 80/20, further more preferably from 40/60 to 70/30, and still further more preferably from 40/60 to 60/40. When the molar ratio of the compound represented by Formula (a1) and the compound represented by Formula (a3) is 100/0, the tetracarboxylic acid component does not include the compound represented by Formula (a3).

When the molar ratio of each tetracarboxylic acid constituting the tetracarboxylic acid component is as described above, the thermal resistance of the polyimide resin can be enhanced while the coatability of the varnish and the adhesion of the polyimide resin are maintained well.

The tetracarboxylic acid component may include a tetracarboxylic acid component other than the compound represented by Formula (a1), the compound represented by Formula (a3), and the compound represented by Formula (a4). Such a tetracarboxylic acid component is not particularly limited, and examples thereof include aromatic tetracarboxylic dianhydrides, alicyclic tetracarboxylic dianhydrides, and aliphatic tetracarboxylic dianhydrides other than the compound represented by Formula (a1), the compound represented by Formula (a3), and the compound represented by Formula (a4).

When the tetracarboxylic acid component includes a tetracarboxylic acid component other than the compound represented by Formula (a1), the compound represented by Formula (a3), and the compound represented by Formula (a4), it is preferable to include an aromatic tetracarboxylic dianhydride among tetracarboxylic dianhydrides excluding the compound represented by Formula (a1), excluding the compound represented by Formula (a3), and excluding the compound represented by Formula (a4).

Examples of the aromatic tetracarboxylic dianhydride include 9,9-bis[4-(3,4-dicarboxyphenoxy)phenyl]fluorene dianhydride (BPF-PA), 2,3,6,7-naphthalenetetracarboxylic 2,3:6,7-dianhydride (NTCDA), 3,3', 4,4'-benzophenone tetracarboxylic dianhydride (BTDA), 9,9-bis(trifluoromethyl)-9H-xanthene-2,3,6,7-tetracarboxylic dianhydride (6FCDA), 2,2-bis[4-(3,4-dicarboxyphenoxy)phenyl]hexafluoropropane dianhydride, 4,4'-oxydiphthalic anhydride (ODPA), 2,2-bis(3,4-dicarboxyphenyl)-propane dianhydride, 3,3', 4,4'-biphenyltetracarboxylic dianhydride (s-BPDA), 2,3,3',4'-biphenyltetracarboxylic dianhydride (a-BPDA), 9,9'-bis(3,4-dicarboxyphenyl)fluorene dianhydride (BPAF), hydroquinone diphthalic anhydride (HQDEA), ethylene glycol bis(trimellitate) dianhydride (TMEG), and p-phenylene bis(trimellitate) dianhydride (TAHQ), and 3,3', 4,4'-benzophenone tetracarboxylic dianhydride (BTDA) is preferable.

Examples of the alicyclic tetracarboxylic dianhydride include cyclohexane-1,2,4,5-tetracarboxylic dianhydride (HPMDA), cyclohexane-1,2,3,4-tetracarboxylic dianhydride, norbornane-2-spiro-α-cyclopentanone-α'-spiro -2"-norbornane-5,5',6,6'-tetracarboxylic dianhydride (CpODA), 1,2,3,4-cyclobutanetetracarboxylic dianhydride, 1,2,3,4-tetramethyl-1, 2,3,4-cyclobutanetetracarboxylic dianhydride, 1,2,3,4-cyclopentanetetracarboxylic dianhydride, 1,2,4,5-cyclopentanetetracarboxylic dianhydride, 3,3', 4,4'-bicyclohexyltetracarboxylic dianhydride, 2,2-propylidene-4,4'-bis(cyclohexane-1,2-dicarboxylic acid) dianhydride, oxy-4,4'-bis(cyclohexane-1,2-dicarboxylic acid) dianhydride, bicyclo[2.2.2]oct-7-ene-2,3,5,6-tetracarboxylic dianhydride, and bicyclo[4.4.0]decane-2,3,6,7-tetracarboxylic dianhydride.

Examples of the aliphatic tetracarboxylic dianhydride include 1,2,3,4-butanetetracarboxylic dianhydride.

These tetracarboxylic dianhydrides may be used alone or in combination of two or more kinds thereof.

### [Diamine component]

The diamine component used as a raw material in the present production method is preferably the diamine described in the section <Structural unit (B)> above. The diamine used as the diamine component in the present production method may be in the form of either a diamine or a diisocyanate corresponding to the diamine, and is preferably a diamine.

The diamine component to be used as a raw material in the present production method includes at least one selected from the group consisting of the compound represented by Formula (b1) (compound that provides the structural unit (B1)), the compound represented by Formula (b2) (compound that provides the structural unit (B2)), and the compound represented by Formula (b3) (compound that provides the structural unit (B3)), preferably includes at least one selected from the group consisting of the compound represented by Formula (b1) and the compound represented by Formula (b2), and more preferably includes the compound represented by Formula (b1). Two or three of the compound represented by Formula (b1), the compound represented by Formula (b2), and the compound represented by Formula (b3) may be included.

A total of a proportion of the compound represented by Formula (b1), a proportion of the compound represented by Formula (b2), and a proportion of the compound represented by Formula (b3) in the diamine component is preferably from 30 to 100 mol, more preferably from 70 to 100 mol, still more preferably from 90 to 100 mol, and even more preferably from 95 to 100 mol, or may be 100 mol, and the diamine component may include only at least one selected from the group consisting of the compound represented by Formula (b1), the compound represented by Formula (b2), and the compound represented by Formula (b3).

A proportion of the compound represented by Formula (b1) in the diamine component is preferably from 30 to 100 mol, more preferably from 70 to 100 mol, still more preferably from 90 to 100 mol, even more preferably from 95 to 100 mol, and may be 100 mol, and the diamine component may include only the compound represented by Formula (b1).

A proportion of the compound represented by Formula (b2) in the diamine component is preferably from 30 to 100 mol, more preferably from 70 to 100 mol, still more preferably from 90 to 100 mol, even more preferably from 95 to 100 mol, and may be 100 mol, and the diamine component may include only the compound represented by Formula (b2).

A proportion of the compound represented by Formula (b3) in the diamine component is preferably from 30 to 100 mol, more preferably from 70 to 100 mol, still more preferably from 90 to 100 mol, even more preferably from 95 to 100 mol, and may be 100 mol, and the diamine component may include only the compound represented by Formula (b3).

When the proportions of the compound represented by Formula (b1), the compound represented by Formula (b2), and the compound represented by Formula (b3) are within the above ranges, the thermal resistance of the resulting polyimide resin is excellent, and the coatability of the precursor varnish and the adhesion of the polyimide resin can also be improved.

The diamine component may include a diamine component other than the compound represented by Formula (b1), the compound represented by Formula (b2), and the compound represented by Formula (b3). Such a diamine component is not particularly limited, and examples thereof include aromatic diamines, aliphatic diamines, and alicyclic diamines excluding any of the compound represented by Formula (b1), the compound represented by Formula (b2), and the compound represented by Formula (b3).

Examples of the aromatic diamine include 2,2'-bis(trifluoromethyl)-4,4'-diaminodiphenyl ether (6FODA), 2,2'-bis(trifluoromethyl)-4,4'-diaminobiphenyl (2,2'-TFMB), 3,3'-bis(trifluoromethyl)-4,4'-diaminobiphenyl, 2,2'-bis(trifluoromethyl)-5,5'-diaminobiphenyl, 2,2-bis(4-aminophenyl)hexafluoropropane (HFDA), 2,2-bis(3-amino-4-methylphenyl)hexafluoropropane, 2,2-bis[4-(4-aminophenoxy)phenyl]hexafluoropropane (HFBAPP), 4,4'-diaminodiphenyl ether (4,4'-ODA), 3,4'-diaminodiphenyl ether, 4,4'-diaminodiphenyl methane (DDM), 4,4'-diaminodiphenyl sulfone (4,4'-DDS), 3,3'-diaminodiphenyl sulfone (3,3'-DDS), 4,4'-diamino-2,2'-dimethylbiphenyl (mTB), 9,9-bis(4-aminophenyl)fluorene (BAFL), 4,4'-diaminobiphenyl (benzidine), 4,4'-diamino-3,3'-dimethylbiphenyl, 4,4'-diaminodiphenyl sulfide, 4,4'-diaminobenzophenone, 2,2-bis(3-aminophenyl)propane, 2,2-bis(4-aminophenyl)propane, 5-amino-1,3,3-trimethyl-1-(4-aminophenyl)-indane (5-TMDM), 6-amino-1,3,3-trimethyl-1-(4-aminophenyl)-indane (6-TMDM), 1,3-bis(3-amino-α,α-dimethylbenzyl)benzene, 1,3-bis(4-amino-α,α-dimethylbenzyl)benzene (BisAM), 1,4-bis(4-amino-α,α-dimethylbenzyl)benzene (BisAP), 4,4'-bis(3-aminophenoxy)biphenyl, 4,4'-bis(4-aminophenoxy)biphenyl (BODA), 1,1-bis[4-(4-aminophenoxy)phenyl]cyclohexane, 2,2-bis[4-(4-aminophenoxy)phenyl]propane (BAPP), 1,4-bis(3-aminophenoxy)benzene, 1,4-bis(4-aminophenoxy)benzene, 1,3-bis(3-aminophenoxy)benzene, 1,3-bis(4-aminophenoxy)benzene, bis[4-(3-aminophenoxy)phenyl]ketone, bis[4-(4-aminophenoxy)phenyl]ketone, bis[4-(3-aminophenoxy)phenyl]sulfide, bis[4-(4-aminophenoxy)phenyl]sulfide, bis[4-(3-aminophenoxy)phenyl]ether, bis[4-(4-aminophenoxy)phenyl]ether, bis[4-(3-aminophenoxy)phenyl]sulfone, bis[4-(4-aminophenoxy)phenyl]sulfone, 4,4-diaminobenzanilide, 4-aminobenzoic acid-4-aminophenyl, and 3,4-diaminobenzanilide.

Examples of the alicyclic diamine include 1,3-bis(aminomethyl)cyclohexane (1,3-BAC), 1,4-bis(aminomethyl)cyclohexane, 1,3-cyclohexyldiamine, 1,4-cyclohexyldiamine, isophorone diamine, bis(aminomethyl)norbornane, 4,4'-diaminodicyclohexylmethane, 4,4'-diaminodicyclohexyl ether, and 2,2-bis(4-aminocyclohexyl)propane.

Examples of the aliphatic diamine include ethylenediamine and hexamethylenediamine.

Diamines may be used alone or in combination of two or more kinds thereof.

### [End-capping agent]

Other than the tetracarboxylic acid component and the diamine component mentioned above, an end-capping agent may also be used in the production of the polyimide resin precursor.

As the end-capping agent, a monoamine type or a dicarboxylic acid type are preferable, and the monoamine type is more preferable. By using the monoamine type as the end-capping agent, the thermal resistance of the polyimide resin can be enhanced while the coatability of the varnish and the adhesion of the polyimide resin are maintained well. A feed amount of the end-capping agent to be introduced is preferably from 0.0001 to 0.2 mol, more preferably from 0.0001 to 0.1 mol, still more preferably from 0.001 to 0.06 mol, and even more preferably from 0.01 to 0.06 mol, per 1 mol of the tetracarboxylic acid component. From the viewpoint of thermal resistance, the feed amount of the end-capping agent to be introduced is preferably from 0.001 to 0.2 mol, more preferably from 0.01 to 0.2 mol, still more preferably from 0.06 to 0.2 mol, and even more preferably from 0.1 to 0.2 mol, per 1 mol of the tetracarboxylic acid component. Examples of the monoamine end-capping agent include methylamine, ethylamine, propylamine, butylamine, benzylamine, 4-methylbenzylamine, 4-ethylbenzylamine, 4-dodecylbenzylamine, 3-methylbenzylamine, 3-ethylbenzylamine, aniline, 3-methylaniline, 4-methylaniline, o-aminophenol (2-aminophenol), m-aminophenol (3-aminophenol), p-aminophenol (4-aminophenol), o-aminobenzoic acid, m-aminobenzoic acid, and p-aminobenzoic acid. Among them, benzylamine, aniline, and p-aminophenol (4-aminophenol) are preferable, and p-aminophenol (4-aminophenol) is more preferable. As the end-capping agent of dicarboxylic acids, dicarboxylic acids are preferable, and a part thereof may be ring-closed. Examples thereof include phthalic acid, phthalic anhydride, 4-chlorophthalic acid, tetrafluorophthalic acid, 2,3-benzophenone dicarboxylic acid, 3,4-benzophenone dicarboxylic acid, cyclopentane-1,2-dicarboxylic acid, and 4-cyclohexene-1,2-dicarboxylic acid. Among them, phthalic acid and phthalic anhydride are more preferable.

### [Solvent (organic solvent)]

The solvent (organic solvent) used for the production of the polyimide resin precursor may be any solvent that can dissolve the produced polyimide resin precursor. Examples thereof include aprotic solvents, phenolic solvents, ether-based solvents, and carbonate solvents, and an aprotic solvent is preferable.

Specific examples of the aprotic solvent include amide-based solvents, lactone-based solvents, phosphorus-containing amide-based solvents, sulfur-containing solvents, ketone-based solvents, and ester-based solvents, and amide-based solvents or lactone-based solvents are preferable, and amide-based solvents are more preferable.

Examples of the amide-based solvent include N,N-dimethylformamide, N,N-dimethylacetamide, N-methyl-2-pyrrolidone, N-methylcaprolactam, 1,3-dimethyl-2-imidazolidinone (1,3-dimethylimidazolidinone), tetramethylurea, 3-methoxy-N,N-dimethylpropanamide, and 3-butoxy-N,N-dimethylpropanamide, and at least one selected from the group consisting of 1,3-dimethyl-2-imidazolidinone and N-methyl-2-pyrrolidone is preferable, N-methyl-2-pyrrolidone is more preferable from the viewpoint of resin solubility, and 1,3-dimethyl-2-imidazolidinone is more preferable from the viewpoint of obtaining a resin having high thermal resistance.

Examples of the lactone-based solvent include γ-butyrolactone and γ-valerolactone, and γ-butyrolactone is preferable.

Examples of the phosphorus-containing amide-based solvent include hexamethylphosphoric amide and hexamethylphosphine triamide.

Examples of the sulfur-containing solvent include dimethyl sulfone, dimethyl sulfoxide, and sulfolane.

Examples of the ketone-based solvent include acetone, methyl ethyl ketone, cyclohexanone, methyl cyclohexanone, and cyclopentanone.

Examples of the ester-based solvent include 2-methoxy-1-methylethyl acetate.

Examples of the phenolic solvent include phenol, o-cresol, m-cresol, p-cresol, 2,3-xylenol, 2,4-xylenol, 2,5-xylenol, 2,6-xylenol, 3,4-xylenol, and 3,5-xylenol.

Examples of the ether-based solvent include 1,2-dimethoxyethane, bis(2-methoxyethyl)ether, 1,2-bis(2-methoxyethoxy)ethane, bis[2-(2-methoxyethoxy)ethyl]ether, tetrahydrofuran, 1,4-dioxane, and propylene glycol monomethyl ether.

Examples of the carbonate-based solvent include diethyl carbonate, methyl ethyl carbonate, ethylene carbonate, and propylene carbonate.

Among the above solvents, it is preferable to include at least one selected from the group consisting of an amide-based solvent and a lactone-based solvent, an amide-based solvent or a lactone-based solvent is preferable, at least one selected from the group consisting of 1,3-dimethyl-2-imidazolidinone, N-methyl-2-pyrrolidone, and γ-butyrolactone is preferable, from the viewpoint of resin solubility, at least one selected from the group consisting of N-methyl-2-pyrrolidone and γ-butyrolactone is more preferable, N-methyl-2-pyrrolidone or γ-butyrolactone is still more preferable, and γ-butyrolactone is even more preferable. From the viewpoint of obtaining a resin having high thermal resistance, at least one selected from the group consisting of 1,3-dimethyl-2-imidazolidinone and γ-butyrolactone is more preferable, 1,3-dimethyl-2-imidazolidinone or γ-butyrolactone is still more preferable, and γ-butyrolactone is even more preferable. The above-mentioned solvents may be used alone, or a mixture of two or more types of the solvents may be used.

From the above, the organic solvent preferably includes at least one selected from the group consisting of an amide-based solvent and a lactone-based solvent, more preferably includes at least one selected from the group consisting of 1,3-dimethyl-2-imidazolidinone, N-methyl-2-pyrrolidone, and γ-butyrolactone, still more preferably includes at least one selected from the group consisting of N-methyl-2-pyrrolidone and γ-butyrolactone, and even more preferably includes γ-butyrolactone.

### [Varnish]

The varnish of the present invention contains the polyimide resin precursor and the organic solvent. That is, the polyimide resin precursor is dissolved in the organic solvent.

The organic solvent is not particularly limited as long as it dissolves the polyimide resin precursor, the compound (solvent described in the section of [Solvent (organic solvent)]) described above is preferable as the solvent used for producing the polyimide resin precursor, and the same applies to a more preferable solvent. Specific examples thereof include aprotic solvents, phenolic solvents, ether-based solvents, and carbonate solvents, and an aprotic solvent is preferable.

Specific examples of the aprotic solvent include amide-based solvents, lactone-based solvents, phosphorus-containing amide-based solvents, sulfur-containing solvents, ketone-based solvents, and ester-based solvents, and amide-based solvents or lactone-based solvents are preferable, and amide-based solvents are more preferable.

Examples of the amide-based solvent include N,N-dimethylformamide, N,N-dimethylacetamide, N-methyl-2-pyrrolidone, N-methylcaprolactam, 1,3-dimethyl-2-imidazolidinone (1,3-dimethylimidazolidinone), tetramethylurea, 3-methoxy-N,N-dimethylpropanamide, and 3-butoxy-N,N-dimethylpropanamide, at least one selected from the group consisting of 1,3-dimethyl-2-imidazolidinone and N-methyl-2-pyrrolidone is preferable, and N-methyl-2-pyrrolidone is more preferable from the viewpoint of resin solubility. From the viewpoint of obtaining a resin having high thermal resistance, the 1,3-dimethyl-2-imidazolidinone used in the production of the precursor is more preferable.

Examples of the lactone-based solvent include γ-butyrolactone and γ-valerolactone, and γ-butyrolactone is preferable.

Examples of the phosphorus-containing amide-based solvent include hexamethylphosphoric amide and hexamethylphosphine triamide.

Examples of the sulfur-containing solvent include dimethyl sulfone, dimethyl sulfoxide, and sulfolane.

Examples of the ketone-based solvent include acetone, methyl ethyl ketone, cyclohexanone, methyl cyclohexanone, and cyclopentanone.

Examples of the ester-based solvent include 2-methoxy-1-methylethyl acetate.

Examples of the phenolic solvent include phenol, o-cresol, m-cresol, p-cresol, 2,3-xylenol, 2,4-xylenol, 2,5-xylenol, 2,6-xylenol, 3,4-xylenol, and 3,5-xylenol.

Examples of the ether-based solvent include 1,2-dimethoxyethane, bis(2-methoxyethyl)ether, 1,2-bis(2-methoxyethoxy)ethane, bis[2-(2-methoxyethoxy)ethyl]ether, tetrahydrofuran, 1,4-dioxane, and propylene glycol monomethyl ether.

Examples of the carbonate-based solvent include diethyl carbonate, methyl ethyl carbonate, ethylene carbonate, and propylene carbonate.

Among the above organic solvents, it is preferable to include at least one selected from the group consisting of an amide-based solvent and a lactone-based solvent, an amide-based solvent or a lactone-based solvent is preferable, at least one selected from the group consisting of 1,3-dimethyl-2-imidazolidinone, N-methyl-2-pyrrolidone, and γ-butyrolactone is preferable, at least one selected from the group consisting of N-methyl-2-pyrrolidone and γ-butyrolactone is more preferable, N-methyl-2-pyrrolidone or γ-butyrolactone is still more preferable, and γ-butyrolactone is even more preferable. From the viewpoint of obtaining a resin having high thermal resistance, among the organic solvents, at least one selected from the group consisting of 1,3-dimethyl-2-imidazolidinone and γ-butyrolactone used in the production of the precursor is more preferable, 1,3-dimethyl-2-imidazolidinone or γ-butyrolactone is still more preferable, and γ-butyrolactone is even more preferable.

The above-mentioned organic solvents may be used alone, or a mixture of two or more types of the solvents may be used.

From the above, the organic solvent preferably includes at least one selected from the group consisting of an amide-based solvent and a lactone-based solvent, more preferably includes at least one selected from the group consisting of 1,3-dimethyl-2-imidazolidinone, N-methyl-2-pyrrolidone, and γ-butyrolactone, still more preferably includes at least one selected from the group consisting of N-methyl-2-pyrrolidone and γ-butyrolactone, and even more preferably includes γ-butyrolactone. From the viewpoint of obtaining a resin having high thermal resistance, the organic solvent more preferably includes at least one selected from the group consisting of 1,3-dimethyl-2-imidazolidinone and γ-butyrolactone used in the production of the precursor, still more preferably includes 1,3-dimethyl-2-imidazolidinone or γ-butyrolactone, and even more preferably includes γ-butyrolactone.

The varnish of the present invention may be the above-mentioned polyimide resin precursor solution itself after the production of the polyimide resin precursor, or may be diluted by further mixing an organic solvent with the polyimide resin precursor solution.

The varnish of the present invention can further contain an imidization catalyst and a dehydration catalyst from the viewpoint of efficiently advancing imidization of a polyamic acid moiety of the polyimide resin precursor of the present invention. As the imidization catalyst, an imidization catalyst having a boiling point of 40°C or higher is preferable. When the imidization catalyst has a boiling point of 40°C or higher, imidization can be sufficiently advanced before volatilization.

Examples of the imidization catalyst include amine compounds such as pyridine and picoline; and imidazole compounds such as imidazole, 1,2-dimethylimidazole, 1-benzylimidazole, 1-benzyl-2-methylimidazole, and benzimidazole. The imidization catalysts mentioned above may be used alone, or two or more types thereof may be used in combination.

Examples of the dehydration catalyst include acid anhydrides such as acetic anhydride, propionic anhydride, n-butyric anhydride, benzoic anhydride, and trifluoroacetic anhydride; and carbodiimide compounds such as dicyclohexylcarbodiimide. These compounds may be used alone, or two or more may be used in combination.

Since the polyimide resin precursor contained in the varnish of the present invention has solvent solubility, the varnish can be made a highly concentrated varnish that is stable at room temperature. The varnish of the present invention contains preferably from 3 to 40 mass%, and more preferably from 5 to 30 mass%, of the polyimide resin precursor. A viscosity of the varnish is preferably from 0.1 to 100 Pa·s and more preferably from 0.1 to 20 Pa·s. The viscosity of the varnish is a value measured at 25°C using an E-type viscometer.

The varnish of the present invention may contain various additives such as an inorganic filler, an adhesion promoter, a release agent, a flame retardant, an ultraviolet stabilizer, a surfactant, a leveling agent, an antifoaming agent, a fluorescent brightener, a crosslinking agent, a polymerization initiator, and a photosensitizer to the extent that required characteristics of the resulting polyimide resin and the polyimide film are not compromised.

The method for producing the varnish of the present invention is not particularly limited, and a known method can be employed. For example, the varnish can be obtained by mixing the solution of the polyimide resin precursor obtained by the above-mentioned production method with a further solvent as necessary to adjust the concentration.

### [Polyimide film and method for producing polyimide film]

The polyimide film of the present invention is preferably produced using the varnish described above.

The polyimide film of the present invention is obtained by imidizing the polyimide resin precursor described above.

The method for producing the polyimide film using the varnish of the present invention is not particularly limited, and a known method can be employed. For example, after the varnish of the present invention is applied onto, or formed into a film-form on a smooth support such as a glass plate, a metal plate, or plastic, an organic solvent such as a reaction solvent or a diluting solvent present in the varnish is removed by heating, thus a polyamic acid film is produced. The polyamic acid in the polyamic acid film is imidized (dehydration-ring closure) by heating, and then the polyimide film can be produced by peeling off from the support.

Since the polyimide film of the present invention can be suitably used as an insulating film in the semiconductor field, the support is preferably silicon, silicon nitride, silicon oxide, or the like, and more preferably silicon.

That is, the polyimide film of the present invention is preferably a film obtained by applying the varnish onto a support and heating the varnish, and a method for producing a polyimide film of the present invention is preferably a method in which the varnish is applied onto a support and heated.

The heating temperature, at which the varnish containing the polyimide resin precursor is dried to obtain a polyimide resin precursor (polyamic acid) film, is preferably from 50 to 150°C. The heating temperature at which the polyimide resin precursor is imidized by heating is preferably from 300 to 420°C and more preferably from 350 to 400°C. The heating time is preferably from 1 minute to 6 hours, more preferably from 5 minutes to 2 hours, and still more preferably from 15 minutes to 1 hour. By setting the temperature and time as described above, the physical properties of the resulting polyimide film are improved.

Examples of the heating atmosphere include air, nitrogen gas, oxygen gas, hydrogen gas, nitrogen/hydrogen mixed gas, and the like, and in order to suppress the coloration of the resulting polyimide resin, the nitrogen gas with an oxygen concentration of 100 ppm or less and nitrogen/hydrogen mixed gas containing hydrogen at a concentration of 0.5% or less are preferable.

Note that the imidization method is not limited to the thermal imidization, and the chemical imidization can also be applied.

The thickness of the polyimide film of the present invention can be appropriately selected according to the application and the like, and is preferably 0.1 µm or more, more preferably 0.3 µm or more, still more preferably 1 µm or more, even more preferably 5 µm or more, and further more preferably 7 µm or more. Furthermore, the thickness is preferably 250 µm or less, more preferably 100 µm or less, still more preferably 50 µm or less, and even more preferably 20 µm or less. When the thickness is within the above range, practical use as an insulating film becomes possible.

The thickness of the polyimide film can be easily controlled by adjusting the solid content concentration and viscosity of the varnish.

Suitable physical property values of the polyimide film of the present invention are as follows. When the following physical property values are satisfied, the polyimide film of the present invention is excellent in thermal resistance.

A glass transition temperature (Tg) is preferably 320°C or higher, more preferably 330°C or higher, still more preferably 350°C or higher, and even still more preferably 400°C or higher.

A 5% weight loss temperature (Td5%) is preferably 500°C or higher, more preferably higher than 500°C.

Note that the above-mentioned physical property values in the present invention can be specifically measured by the methods described in Examples.

Since the polyimide film of the present invention has excellent properties as described above, the polyimide film can be used for various applications, and is particularly suitably used as a film for various members of semiconductor parts. Among them, the polyimide film is suitably used as an insulating film of a semiconductor.

### [Polyimide resin]

The polyimide resin of the present invention is a polyimide resin having a structural unit AI derived from a tetracarboxylic dianhydride and a structural unit BI derived from a diamine, in which the structural unit AI includes a structural unit (AI1) derived from a compound represented by Formula (a1) described below, and the structural unit BI includes at least one selected from the group consisting of a structural unit (BI1) derived from a compound represented by Formula (b1) described below, a structural unit (BI2) derived from a compound represented by Formula (b2) described below, and a structural unit (BI3) derived from a compound represented by Formula (b3) described below.

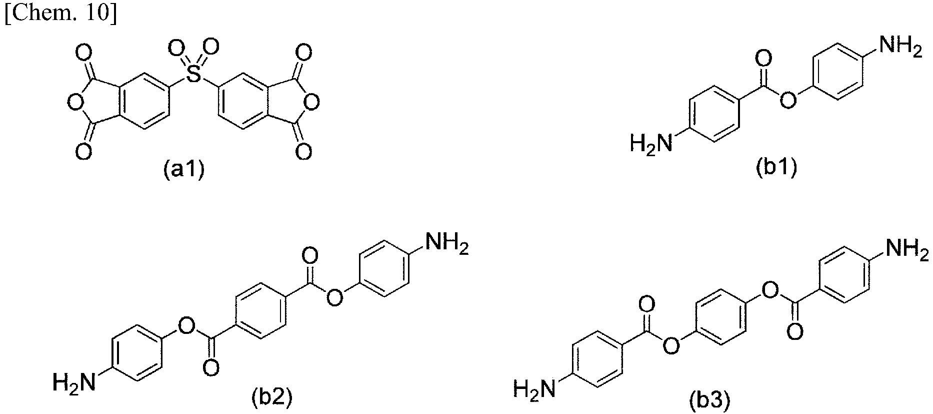

The polyimide resin of the present invention constitutes the above-mentioned polyimide film, and the above-mentioned polyimide film is made of the polyimide resin of the present invention.

The polyimide resin of the present invention may be obtained by any production method, and is preferably obtained by a production method in which the above-mentioned polyimide resin precursor is imidized.

The reason why the polyimide resin of the present invention and the polyimide film containing the polyimide resin are excellent in thermal resistance and adhesion is not clear, and is considered as follows.

It is considered that the polyimide resin and the polyimide film of the present invention have a structure derived from a specific tetracarboxylic dianhydride component having a substituent with a large steric hindrance and having a flexible site, and have a structure derived from a specific diamine having an ester skeleton having high linearity and exhibiting relatively low water absorption, so that the polyimide resin and the polyimide film have excellent thermal resistance. In addition, it is considered that the polyimide resin and the polyimide film of the present invention have the above structure, and thus hardly absorb moisture that inhibits adhesion. As described above, the polyimide resin and the polyimide film of the present invention are considered to be excellent in thermal resistance and adhesion.

### <Structural units of polyimide resin>

The structural unit constituting the polyimide resin of the present invention is the same as each structural unit described in the section of [polyimide resin precursor] above.

That is, the polyimide resin has the structural unit AI derived from tetracarboxylic dianhydride and the structural unit BI derived from diamine.

In the polyimide resin, the structural unit AI and the structural unit BI form an imide structure.

### (Structural unit AI)

The structural unit AI includes the structural unit (AI1) derived from a compound represented by Formula (a1) described below.

When the structural unit AI includes the structural unit (AI1), the adhesion of the polyimide resin can be improved.

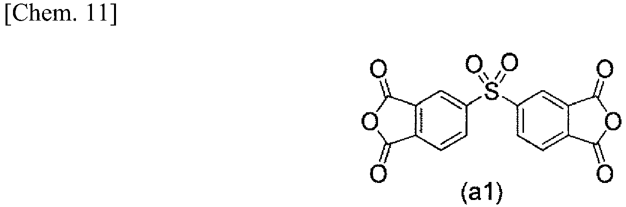

The compound represented by Formula (a1) is 3,3',4,4'-diphenylsulfonetetracarboxylic dianhydride (DSDA). When the structural unit AI includes the structural unit (AI1), the thermal resistance of the polyimide resin is excellent, and the adhesion of the polyimide resin can also be improved.

The proportion of the structural unit (AI1) in the structural unit AI is preferably from 30 to 100 mol, more preferably from 70 to 100 mol, still more preferably from 90 to 100 mol, even more preferably from 95 to 100 mol, and may be 100 mol, and the structural unit AI may include only the structural unit (AI1).

When the proportion of the structural unit (AI1) is within the above range, the thermal resistance of the polyimide resin is excellent, and the adhesion can also be improved.

The structural unit AI may include only the structural unit (AI1) or may include a structural unit other than the structural unit (AI1), and as the structural unit other than the structural unit (AI1), the structural unit AI preferably further includes at least one selected from the group consisting of a structural unit (AI3) derived from a compound represented by Formula (a3) described below and a structural unit (AI4) derived from a compound represented by Formula (a4) described below, and more preferably includes a structural unit (AI3) derived from a compound represented by Formula (a3) described below.

That is, the structural unit AI includes at least one selected from the group consisting of the structural unit (AI3) derived from the compound represented by Formula (a3) and the structural unit (AI4) derived from the compound represented by Formula (a4), and the structural unit (AI1) derived from the compound represented by Formula (a1), or includes only the structural unit (AI1).

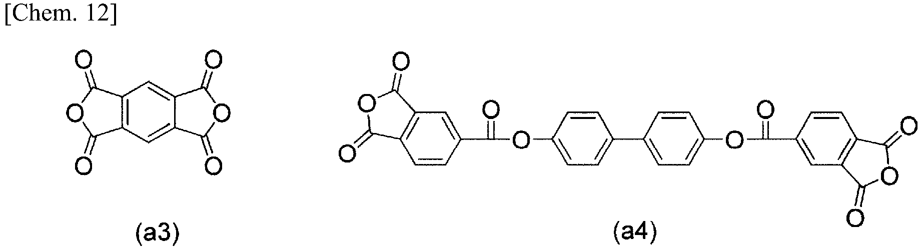

The compound represented by Formula (a3) is pyromellitic anhydride (PMDA). When the structural unit A includes the structural unit (AI3), the thermal resistance of the polyimide resin can be enhanced while the coatability of the varnish and the adhesion of the polyimide resin are maintained well.

The compound represented by Formula (a4) is 4,4-bis(1,3-dioxo-1,3-dihydroisobenzofuran-5-ylcarbonyloxy)biphenyl (BP-TME). When the structural unit AI includes the structural unit (AI4), the thermal resistance of the polyimide resin can be enhanced while the coatability of the varnish and the adhesion of the polyimide resin are maintained well.

A molar ratio [(AI1)/((AI3) + (AI4))] of the structural unit (AI1) and a total of the structural unit (AI3) and the structural unit (AI4) in the structural unit AI is preferably from 30/70 to 100/0, more preferably from 40/60 to 100/0, still more preferably from 50/50 to 100/0, even more preferably from 60/40 to 100/0, further more preferably from 60/40 to 90/10, and still further more preferably from 60/40 to 80/20. When the molar ratio of the structural unit (AI1) and the total of the structural unit (AI3) and the structural unit (AI4) is 100/0, the structural unit AI does not include the structural unit (AI3) and the structural unit (AI4).

A molar ratio [(AI1)/(AI3)] of the structural unit (AI1) to the structural unit (AI3) in the structural unit AI is preferably from 30/70 to 100/0, more preferably from 40/60 to 100/0, still more preferably from 40/60 to 90/10, even more preferably from 40/60 to 80/20, further more preferably from 40/60 to 70/30, and still further more preferably from 40/60 to 60/40. When the molar ratio of the structural unit (AI1) to the structural unit (AI3) is 100/0, the structural unit AI does not include the structural unit (AI3).

When the molar ratio of the structural unit included in the structural unit AI is as described above, the thermal resistance of the polyimide resin can be enhanced while the coatability of the varnish and the adhesion of the polyimide resin are maintained well.

The structural unit AI may include a structural unit other than the structural unit (AI1), the structural unit (AI3), and the structural unit (AI4). The tetracarboxylic dianhydride that provides such a structural unit is not particularly limited, and examples thereof include aromatic tetracarboxylic dianhydrides, alicyclic tetracarboxylic dianhydrides, and aliphatic tetracarboxylic dianhydrides, excluding the compound represented by Formula (a1), excluding the compound represented by Formula (a3), and excluding the compound represented by Formula (a4). When the structural unit AI includes a structural unit other than the structural unit (AI1), the structural unit (AI3) and the structural unit (AI4), it is preferable to include an aromatic tetracarboxylic dianhydride among tetracarboxylic dianhydrides excluding the compound represented by Formula (a1), excluding the compound represented by Formula (a3), and excluding the compound represented by Formula (a4).

Examples of the aromatic tetracarboxylic dianhydride include 9,9-bis[4-(3,4-dicarboxyphenoxy)phenyl]fluorene dianhydride (BPF-PA), 2,3,6,7-naphthalenetetracarboxylic 2,3:6,7-dianhydride (NTCDA), 3,3', 4,4'-benzophenone tetracarboxylic dianhydride (BTDA), 9,9-bis(trifluoromethyl)-9H-xanthene-2,3,6,7-tetracarboxylic dianhydride (6FCDA), 2,2-bis[4-(3,4-dicarboxyphenoxy)phenyl]hexafluoropropane dianhydride, 4,4'-oxydiphthalic anhydride (ODPA), 2,2-bis(3,4-dicarboxyphenyl)-propane dianhydride, 3,3', 4,4'-biphenyltetracarboxylic dianhydride (s-BPDA), 2,3,3',4'-biphenyltetracarboxylic dianhydride (a-BPDA), 9,9'-bis(3,4-dicarboxyphenyl)fluorene dianhydride (BPAF), hydroquinone diphthalic anhydride (HQDEA), ethylene glycol bis(trimellitate) dianhydride (TMEG), and p-phenylene bis(trimellitate) dianhydride (TAHQ), and 3,3', 4,4'-benzophenone tetracarboxylic dianhydride (BTDA) is preferable.

Examples of the alicyclic tetracarboxylic dianhydride include cyclohexane-1,2,4,5-tetracarboxylic dianhydride (HPMDA), cyclohexane-1,2,3,4-tetracarboxylic dianhydride, norbornane-2-spiro-α-cyclopentanone-α'-spiro -2"-norbornane-5,5',6,6'-tetracarboxylic dianhydride (CpODA), 1,2,3,4-cyclobutanetetracarboxylic dianhydride, 1,2,3,4-tetramethyl-1, 2,3,4-cyclobutanetetracarboxylic dianhydride, 1,2,3,4-cyclopentanetetracarboxylic dianhydride, 1,2,4,5-cyclopentanetetracarboxylic dianhydride, 3,3', 4,4'-bicyclohexyltetracarboxylic dianhydride, 2,2-propylidene-4,4'-bis(cyclohexane-1,2-dicarboxylic acid) dianhydride, oxy-4,4'-bis(cyclohexane-1,2-dicarboxylic acid) dianhydride, bicyclo[2.2.2]oct-7-ene-2,3,5,6-tetracarboxylic dianhydride, and bicyclo[4.4.0]decane-2,3,6,7-tetracarboxylic dianhydride.

Examples of the aliphatic tetracarboxylic dianhydride include 1,2,3,4-butanetetracarboxylic dianhydride.

The structural unit optionally included in the structural unit AI may be of one type or two or more types.

### (Structural unit BI)

The structural unit BI is a structural unit derived from a diamine.

The structural unit BI includes at least one selected from the group consisting of a structural unit (BI1) derived from a compound represented by Formula (b1) described below, a structural unit (BI2) derived from a compound represented by Formula (b2) described below, and a structural unit (BI3) derived from a compound represented by Formula (b3) described below.

When the structural unit BI includes one or more of the structural unit (BI1), the structural unit (BI2), and the structural unit (BI3), the adhesion of the polyimide resin can be improved.

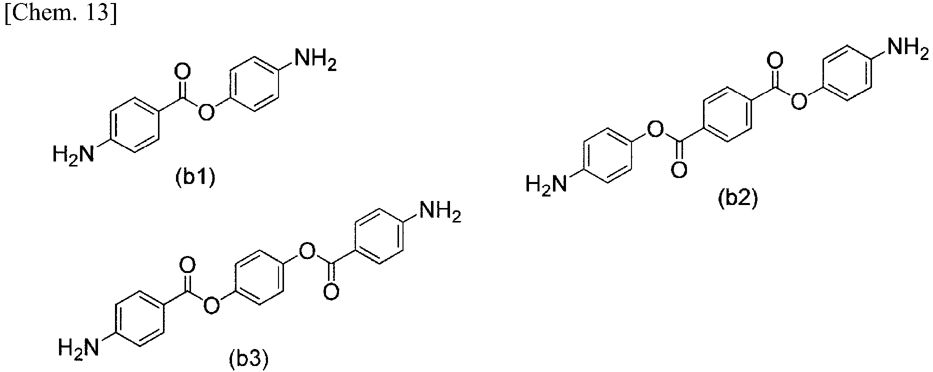

The compound represented by Formula (bl) is 4-aminophenyl-4-aminobenzoate (4-BAAB). When the structural unit BI includes the structural unit (BI1), the thermal resistance of the resulting polyimide resin is excellent, and the adhesion can also be improved.

The compound represented by Formula (b2) is bis(4-aminophenyl)terephthalate (APTP). When the structural unit BI includes the structural unit (BI2), the thermal resistance of the polyimide resin is excellent, and the adhesion can also be improved.

The compound represented by Formula (b3) is 1,4-bis(4-aminobenzoyloxy)benzene. When the structural unit BI includes the structural unit (BI3), the thermal resistance of the polyimide resin is excellent, and the adhesion can also be improved.

The structural unit BI includes at least one selected from the group consisting of the structural unit (BI1), the structural unit (BI2), and the structural unit (BI3), preferably includes at least one selected from the group consisting of the structural unit (BI1) and the structural unit (BI2), and more preferably includes the structural unit (BI1).

A total of a proportion of the structural unit (BI1), a proportion of the structural unit (BI2), and a proportion of the structural unit (BI3) in the structural unit BI is preferably from 30 to 100 mol, more preferably from 70 to 100 mol, still more preferably from 90 to 100 mol, even more preferably from 95 to 100 mol, and may be 100 mol, and the structural unit BI may include only at least one selected from the group consisting of the structural unit (BI1), the structural unit (BI2), and the structural unit (BI3).

The proportion of the structural unit (BI1) in the structural unit BI is preferably from 30 to 100 mol, more preferably from 70 to 100 mol, still more preferably from 90 to 100 mol, even more preferably from 95 to 100 mol, and may be 100 mol, and the structural unit BI may include only the structural unit (BI1).

The proportion of the structural unit (BI2) in the structural unit BI is preferably from 30 to 100 mol, more preferably from 70 to 100 mol, still more preferably from 90 to 100 mol, even more preferably from 95 to 100 mol, and may be 100 mol, and the structural unit BI may include only the structural unit (BI2).

The proportion of the structural unit (BI3) in the structural unit BI is preferably from 30 to 100 mol, more preferably from 70 to 100 mol, still more preferably from 90 to 100 mol, even more preferably from 95 to 100 mol, and may be 100 mol, and the structural unit BI may include only the structural unit (BI3).

When the proportions of the structural unit (BI1), the structural unit (BI2), and the structural unit (BI3) are within the above ranges, the thermal resistance of the resulting polyimide resin is excellent, and the adhesion of the polyimide resin can also be improved.

The structural unit BI may include a structural unit other than the structural unit (BI1), the structural unit (BI2), and the structural unit (BI3). The diamine that provides such a structural unit is not particularly limited, and examples thereof include aromatic diamines, aliphatic diamines, and alicyclic diamines excluding any of the compound represented by Formula (b1), the compound represented by Formula (b2), and the compound represented by Formula (b3).

Examples of the aromatic diamine include 2,2'-bis(trifluoromethyl)-4,4'-diaminodiphenyl ether (6FODA), 2,2'-bis(trifluoromethyl)-4,4'-diaminobiphenyl (2,2'-TFMB), 3,3'-bis(trifluoromethyl)-4,4'-diaminobiphenyl, 2,2'-bis(trifluoromethyl)-5,5'-diaminobiphenyl, 2,2-bis(4-aminophenyl)hexafluoropropane (HFDA), 2,2-bis(3-amino-4-methylphenyl)hexafluoropropane, 2,2-bis[4-(4-aminophenoxy)phenyl]hexafluoropropane (HFBAPP), 4,4'-diaminodiphenyl ether (4,4'-ODA), 3,4'-diaminodiphenyl ether, 4,4'-diaminodiphenyl methane (DDM), 4,4'-diaminodiphenyl sulfone (4,4'-DDS), 3,3'-diaminodiphenyl sulfone (3,3'-DDS), 4,4'-diamino-2,2'-dimethylbiphenyl (mTB), 9,9-bis(4-aminophenyl)fluorene (BAFL), 4,4'-diaminobiphenyl (benzidine), 4,4'-diamino-3,3'-dimethylbiphenyl, 4,4'-diaminodiphenyl sulfide, 4,4'-diaminobenzophenone, 2,2-bis(3-aminophenyl)propane, 2,2-bis(4-aminophenyl)propane, 5-amino-1,3,3-trimethyl-1-(4-aminophenyl)-indane (5-TMDM), 6-amino-1,3,3-trimethyl-1-(4-aminophenyl)-indane (6-TMDM), 1,3-bis(3-amino-α,α-dimethylbenzyl)benzene, 1,3-bis(4-amino-α,α-dimethylbenzyl)benzene (BisAM), 1,4-bis(4-amino-α,α-dimethylbenzyl)benzene (BisAP), 4,4'-bis(3-aminophenoxy)biphenyl, 4,4'-bis(4-aminophenoxy)biphenyl (BODA), 1,1-bis[4-(4-aminophenoxy)phenyl]cyclohexane, 2,2-bis[4-(4-aminophenoxy)phenyl]propane (BAPP), 1,4-bis(3-aminophenoxy)benzene, 1,4-bis(4-aminophenoxy)benzene, 1,3-bis(3-aminophenoxy)benzene, 1,3-bis(4-aminophenoxy)benzene, bis[4-(3-aminophenoxy)phenyl]ketone, bis[4-(4-aminophenoxy)phenyl]ketone, bis[4-(3-aminophenoxy)phenyl]sulfide, bis[4-(4-aminophenoxy)phenyl]sulfide, bis[4-(3-aminophenoxy)phenyl]ether, bis[4-(4-aminophenoxy)phenyl]ether, bis[4-(3-aminophenoxy)phenyl]sulfone, bis[4-(4-aminophenoxy)phenyl]sulfone, 4,4-diaminobenzanilide, 4-aminobenzoic acid-4-aminophenyl, and 3,4-diaminobenzanilide.

Examples of the alicyclic diamine include 1,3-bis(aminomethyl)cyclohexane (1,3-BAC), 1,4-bis(aminomethyl)cyclohexane, 1,3-cyclohexyldiamine, 1,4-cyclohexyldiamine, isophorone diamine, bis(aminomethyl)norbornane, 4,4'-diaminodicyclohexylmethane, 4,4'-diaminodicyclohexyl ether, and 2,2-bis(4-aminocyclohexyl)propane.

Examples of the aliphatic diamine include ethylenediamine and hexamethylenediamine.

The structural unit optionally included in the structural unit BI, other than the structural unit (BI1), the structural unit (BI2), and the structural unit (BI3) may be of one type or two or more types.

The polyimide resin of the present invention may have a structure besides a polyimide chain (structure in which the structural unit AI and the structural unit BI are imide-bonded) as long as the present invention is not impaired. As the structure, other than the polyimide chain, that can be contained in the polyimide resin, examples thereof include a structure containing an amide bond.

The polyimide resin of the present invention preferably includes a polyimide chain (structure in which the structural unit AI and the structural unit BI are imide-bonded) as a main structure. Therefore, the proportion of the polyimide chain in the polyimide resin of the present invention is preferably 80 mass% or more, more preferably 90 mass% or more, still more preferably 99 mass% or more, and even more preferably 100 mass%.

Suitable physical property values of the polyimide resin of the present invention are as follows. When the following physical property values are satisfied, the polyimide resin of the present invention is excellent in thermal resistance.

The glass transition temperature (Tg) is preferably 400°C or higher, more preferably 410°C or higher, still more preferably 420°C or higher, even more preferably 430°C or higher, further more preferably 440°C or higher, and still further more preferably 450°C or higher.

The 5% weight loss temperature (Td5%) is preferably 500°C or higher, more preferably higher than 500°C.

Note that the above-mentioned physical property values in the present invention can be specifically measured by the methods described in Examples.

Since the polyimide resin of the present invention has excellent properties as described above, the polyimide resin can be used for various applications, and is particularly suitably used as a resin for various members of semiconductor parts. Among them, the polyimide resin is suitably used as an insulating film of a semiconductor.

### [Polyimide film including polyimide resin]

A polyimide film including the polyimide resin of the present invention is also included in the present invention.

As described above, the polyimide film including the polyimide resin of the present invention is preferably obtained by a production method in which the above-mentioned polyimide resin precursor is imidized.

The thickness of the polyimide film including the polyimide resin of the present invention can be appropriately selected according to the application and the like, and is preferably 0.1 µm or more, more preferably 0.3 µm or more, still more preferably 1 µm or more, even more preferably 5 µm or more, and further more preferably 7 µm or more. Furthermore, the thickness is preferably 250 µm or less, more preferably 100 µm or less, still more preferably 50 µm or less, and even more preferably 20 µm or less. When the thickness is within the above range, practical use as an insulating film becomes possible.

The thickness of the polyimide film can be easily controlled by adjusting the solid content concentration and viscosity of the varnish.

Suitable physical property values of the polyimide film including the polyimide resin of the present invention are as follows. When the following physical property values are satisfied, the polyimide film is excellent in thermal resistance.

The glass transition temperature (Tg) is preferably 400°C or higher, more preferably 410°C or higher, still more preferably 420°C or higher, even more preferably 430°C or higher, further more preferably 440°C or higher, and still further more preferably 450°C or higher.

The 5% weight loss temperature (Td5%) is preferably 500°C or higher, more preferably higher than 500°C.

Note that the above-mentioned physical property values in the present invention can be specifically measured by the methods described in Examples.

Since the polyimide film including the polyimide resin of the present invention has excellent properties as described above, the polyimide film can be used for various applications, and is particularly suitably used as a film for various members of semiconductor parts. Among them, the polyimide film is suitably used as an insulating film of a semiconductor.

### Examples

Hereinafter, the present invention will be specifically described with reference to Examples. However, the present invention is not limited in any way by these examples.

### <Physical properties and evaluation of varnish and polyimide film>

The physical properties and evaluation of the varnish and the polyimide film obtained in Examples and Comparative Examples were performed by the following methods.

### (1) Rinseability (evaluation of coatability)

PGME (propylene glycol monomethyl ether), cyclohexanone or cyclopentanone as a rinse solvent was added to the varnishes obtained in Examples and Comparative Examples, and the presence or absence of precipitation of the polyimide resin precursor was visually evaluated. A ratio (varnish/rinse solvent) of the varnish to the rinse solvent in a solution used for evaluation was set to 1/99 (volume/volume). A uniform solution in a state in which the polyimide resin precursor was dissolved was evaluated as the "presence" of rinseability, and a non-uniform dispersion in which the polyimide resin precursor was precipitated was evaluated as the "absence" of the rinseability. The solution having rinseability is excellent in coatability. In addition, a solution having the rinseability with more solvents is more excellent in coatability.

### (2) Film thickness

The film thickness was measured using a digital gauge SA-S110/03N available from Citizen Finedevice Co., Ltd.

### (3) Glass transition temperature (Tg) (evaluation of thermal resistance)

Using a thermomechanical analyzer "TMA 7100C" available from Hitachi High-Tech Science Corporation, the temperature was raised from 40°C to 500°C under the conditions of a sample size of 4 mm × 20 mm, a load of 50 mN, and a heating rate of 10°C/min in a tensile mode to perform TMA measurement, and a point where an inflection point was observed by extrapolation was defined as the glass transition temperature (Tg). The larger the value of the glass transition temperature (Tg), the better the thermal resistance.

### (4) 5% weight loss temperature (Td5%) (evaluation of thermal resistance)

For the measurement, a simultaneous thermogravimetric and differential thermal analyzer "NEXTA STA200 RV" available from Hitachi High-Tech Science Corporation was used. A sample was heated from 40°C to 150°C at a heating rate of 10°C/min, held at 150°C for 30 minutes thereby removing moisture, and then the temperature was raised to 500°C. A temperature at which the weight decreased by 5% as compared with the weight after holding at 150°C for 30 minutes was defined as the 5% weight loss temperature. The larger the numerical value of the weight loss temperature, the better the thermal resistance. In Table 1, "> 500" indicates that as a result of raising the temperature to 500°C, the weight loss does not reach 5%, and the 5% weight loss temperature is more than 500°C.

### (5) Cross-cut test (evaluation of adhesion)

A cross-cut test was performed under the following conditions in accordance with ASTM D3359 to evaluate the adhesion.

A polyimide layer (polyimide film) was obtained on a 4-inch silicon wafer by the method described in Example.

The polyimide layer is cut into a lattice of 100 squares (1 square has a size of 1 mm × 1 mm) using a cutter knife, and this is used as a lattice portion (cross cut portion). A tape (Cellotape (registered trademark), CT-24 available from NICHIBAN Co., Ltd.) is attached to the entire surface of the lattice portion (cross cut portion). The attached tape was peeled off over 0.5 to 1 seconds. Thereafter, the number of squares of the polyimide layer remaining in the lattice portion was counted. The larger the number of squares of the polyimide layer remaining after tape peeling, the better the adhesion.

The tetracarboxylic acid component and diamine component used in the examples and comparative examples, and the abbreviations thereof are as follows.

### <Tetracarboxylic acid component>

DSDA: 3,3',4,4'-diphenylsulfonetetracarboxylic dianhydride (available from ChinaTech Chemical (Tianjin) Co., Ltd.; compound represented by Formula (a1))
PMDA: pyromellitic dianhydride (compound represented by Formula (a3))
6FDA: 4,4'-(hexafluoroisopropylidene) diphthalic anhydride (available from Daikin Industries, Ltd.)
s-BPDA: 3,3',4,4'-biphenyltetracarboxylic dianhydride (available from Mitsubishi Chemical Corporation.)
ODPA: 4,4'-oxydiphthalic anhydride (available from MANAC Incorporated)

### <Diamine component>

4-BAAB: 4-aminophenyl-4-aminobenzoate (available from Nipponjunryo Chemicals Co., Ltd.; compound represented by Formula (b1))

### <End-capping agent>

### 4-aminophenol

Abbreviations for solvents and the like used in the examples and comparative examples are as follows.
NMP: N-methyl-2-pyrrolidone (available from Tokyo Junyaku Kogyo Co., Ltd.)
GBL: γ-butyrolactone (available from Mitsubishi Chemical Corporation)
DMI: 1,3-dimethyl-2-imidazolidinone (available from Mitsui Chemicals, Inc.)

### Example 1

A 500 mL five-neck round-bottom flask provided with a semilunar-shaped stirring blade made of stainless steel, a nitrogen inlet tube, a Dean-Stark apparatus equipped with a condenser, a thermometer, and an end cap made of glass was charged with 22.825 g (0.100 mol) of 4-BAAB and 187.690 g of NMP, the mixture was stirred at a rotational speed of 200 rpm in a nitrogen atmosphere with a system temperature of 50°C, and a solution was obtained.

To this solution, 35.828 g (0.100 mol) of DSDA and 46.922 g of NMP were charged at once, and the resulting mixture was stirred for 3 hours while being maintained at 50°C by a mantle heater to obtain a polyamic acid (polyimide resin precursor) varnish having a solid content concentration of 20 mass%.

Subsequently, the obtained polyamic acid varnish was applied onto a supporting substrate (4 inch silicon wafer), and held on a hot plate at 80°C for 20 minutes, then the temperature was raised to 400°C at a heating rate of 5°C/min in a nitrogen atmosphere in a hot air dryer, and heating was performed at 400°C for 60 minutes to evaporate the solvent and perform thermal imidization, thereby obtaining a polyimide film. The evaluation results of the varnish and the film are shown in Table 1.

### Examples 2 to 8 and Comparative Example 3

A polyamic acid (polyimide resin precursor) varnish having a solid content concentration of 20 mass% was obtained in the same manner as in Example 1 except that the kinds of the tetracarboxylic acid component, the diamine component, and the solvent were changed as shown in Table 1. In addition, a polyimide film was obtained in the same manner as in Example 1. In Examples 6 and 7, 4-aminophenol in the amount shown in Table 1 was charged simultaneously with the tetracarboxylic acid component as an end-capping agent. The evaluation results of the varnish and the film are shown in Table 1.

### Comparative Example 1

A 500 mL five-neck round-bottom flask provided with a semilunar-shaped stirring blade made of stainless steel, a nitrogen inlet tube, a Dean-Stark apparatus equipped with a condenser, a thermometer, and an end cap made of glass was charged with 22.825 g (0.100 mol) of 4-BAAB and 167.190 g of NMP, the mixture was stirred at a rotational speed of 200 rpm in a nitrogen atmosphere with a system temperature of 50°C, and a solution was obtained.

To this solution, 29.422 g (0.100 mol) of s-BPDA and 41.798 g of NMP were collectively charged, and stirred for 3 hours while being maintained at 50°C by a mantle heater, and NMP was then charged and stirred until it became uniform to obtain a polyamic acid (polyimide resin precursor) varnish having a solid content concentration of 10 mass%.

Subsequently, the obtained polyamic acid varnish was applied onto a supporting substrate (4 inch silicon wafer), and held on a hot plate at 80°C for 20 minutes, then the temperature was raised to 400°C at a heating rate of 5°C/min in a nitrogen atmosphere in a hot air dryer, and heating was performed at 400°C for 60 minutes to evaporate the solvent and perform thermal imidization, thereby obtaining a polyimide film. The evaluation results of the varnish and the film are shown in Table 1.

### Comparative Example 2

A 500 mL five-neck round-bottom flask provided with a semilunar-shaped stirring blade made of stainless steel, a nitrogen inlet tube, a Dean-Stark apparatus equipped with a condenser, a thermometer, and an end cap made of glass was charged with 22.825 g (0.100 mol) of 4-BAAB and 172.307 g of NMP, the mixture was stirred at a rotational speed of 200 rpm in a nitrogen atmosphere with a system temperature of 50°C, and a solution was obtained.

To this solution, 31.021 g (0.100 mol) of ODPA and 43.077 g of NMP were collectively charged, and stirred for 3 hours while being maintained at 50°C by a mantle heater, and NMP was then charged and stirred until it became uniform to obtain a polyamic acid (polyimide resin precursor) varnish having a solid content concentration of 15 mass%.

Subsequently, the obtained polyamic acid varnish was applied onto a supporting substrate (4 inch silicon wafer), and held on a hot plate at 80°C for 20 minutes, then the temperature was raised to 400°C at a heating rate of 5°C/min in a nitrogen atmosphere in a hot air dryer, and heating was performed at 400°C for 60 minutes to evaporate the solvent and perform thermal imidization, thereby obtaining a polyimide film. The evaluation results of the varnish and the film are shown in Table 1.

### [Table 1]

**Table 1**

| | | | Example 1 | Example 2 | Example 3 | Example 4 | Example 5 | Example 6 | Example 7 | Example 8 | Comparative Example 1 | Comparative Example 2 | Comparative Example 3 |
|---|---|---|---|---|---|---|---|---|---|---|---|---|---|
| Polyimide resin precursor (numbering indicates molar ratio) | Tetracarboxylic acid component | DSDA (al) | 100 | 100 | 50 | 50 | 40 | 50 | 50 | 50 | - | - | - |
| | | PMDA (a3) | - | - | 50 | 50 | 60 | 50 | 50 | 50 | - | - | - |
| | | s-BPDA | - | - | - | - | - | - | - | - | 100 | - | - |
| | | ODPA | - | - | - | - | - | - | - | - | - | 100 | - |
| | | 6FDA | - | - | - | - | - | - | - | - | - | - | 100 |
| | Diamine component | 4-BAAB (b1) | 100 | 100 | 100 | 100 | 100 | 97.5 | 92.5 | 100 | 100 | 100 | 100 |
| | End-capping agent | 4-Aminophenol | - | - | - | - | - | 5 | 15 | - | - | - | - |
| | Reaction solvent | - | NMP | GBL | NMP | GBL | NMP | NMP | NMP | DMI | NMP | NMP | GBL |
| Varnish | Organic solvent | - | NMP | GBL | NMP | GBL | NMP | NMP | NMP | DMI | NMP | NMP | GBL |
| Varnish evaluation | Coatability | Rinseability (solvent: PGME) | Presence | Presence | Presence | Presence | Presence | Presence | Presence | Presence | Absence | Absence | Presence |
| | | Rinseability (solvent: cyclohexanone) | Presence | Presence | Presence | Presence | Presence | Presence | Absence | Presence | Absence | Absence | Presence |
| | | Rinseability (solvent: cyclopentanone) | Presence | Presence | Presence | Presence | Presence | Presence | Presence | Presence | Absence | Absence | Presence |
| Film evaluation | - | Film thickness (µm) | 13.0 | 16.5 | 10.4 | 10.5 | 9.4 | 10.2 | 10.1 | 10.1 | 10.5 | 11.4 | 15.3 |
| | thermal resistance | Tg (°C) | 439 | 443 | 428 | 454 | 417 | 445 | 464 | 434 | 429 | 423 | 337 |
| | | Td5% (°C) | > 500 | > 500 | > 500 | > 500 | > 500 | > 500 | > 500 | > 500 | > 500 | > 500 | > 500 |
| | Adhesion | Cross-cut test (number of remaining squares) | 100 | 100 | 100 | 100 | 100 | 100 | 100 | 100 | 0 | 0 | 100 |

As shown in Table 1, it can be seen that the polyimide resin precursor varnish of Example has good rinseability and thus is excellent in coatability. Further, it can be seen that the polyimide film (polyimide resin) obtained from the polyimide resin precursor of Example is excellent in thermal resistance because the values of the glass transition temperature and the 5% weight loss temperature are large. Furthermore, it can be seen that adhesion to a silicon wafer is excellent. This shows that the polyimide resin precursor of the present invention can provide a polyimide resin and a polyimide film that are excellent in coatability, thermal resistance, and adhesion, and is useful as a raw material in the semiconductor field.

## Claims

1. A polyimide resin precursor comprising:
a structural unit A derived from a tetracarboxylic dianhydride; and
a structural unit B derived from a diamine,
wherein the structural unit A includes a structural unit (A1) derived from a compound represented by Formula (a1), and
the structural unit B includes at least one selected from the group consisting of a structural unit (B1) derived from a compound represented by Formula (b1), a structural unit (B2) derived from a compound represented by Formula (b2), and a structural unit (B3) derived from a compound represented by Formula (b3):

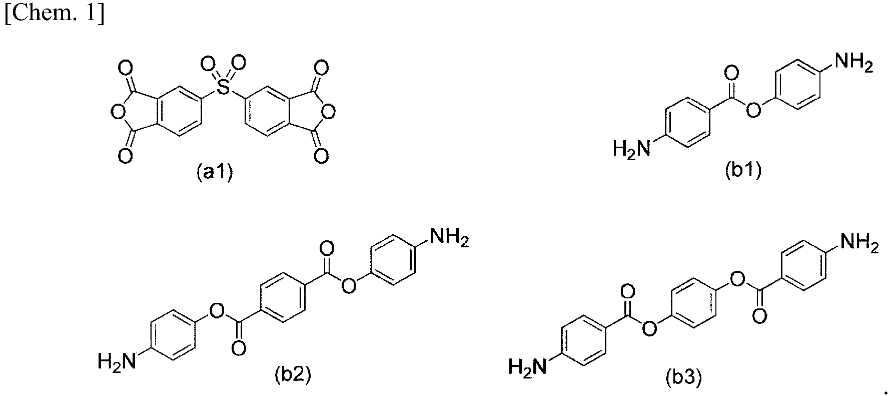

2. The polyimide resin precursor according to claim 1, wherein a proportion of the structural unit (A1) in the structural unit A is from 30 to 100 mol%.

3. The polyimide resin precursor according to claim 1 or 2, wherein a total of a proportion of the structural unit (B1), a proportion of the structural unit (B2), and a proportion of the structural unit (B3) in the structural unit B is from 30 to 100 mol%.

4. The polyimide resin precursor according to any one of claims 1 to 3, wherein the polyimide resin precursor is a polyamic acid.

5. The polyimide resin precursor according to any one of claims 1 to 4, wherein the structural unit A further includes at least one selected from the group consisting of a structural unit (A3) derived from a compound represented by Formula (a3) and a structural unit (A4) derived from a compound represented by Formula (a4):

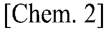

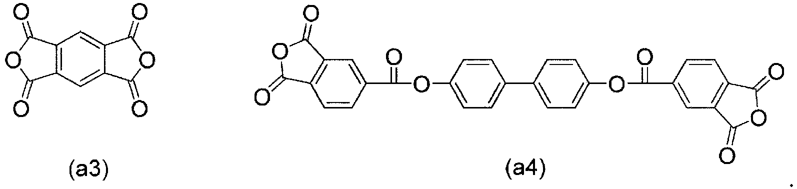

6. The polyimide resin precursor according to any one of claims 1 to 5, wherein a molar ratio [(A1)/((A3) + (A4))] of the structural unit (A1) and a total of the structural unit (A3) and the structural unit (A4) in the structural unit A is from 30/70 to 100/0.

7. A varnish comprising:
the polyimide resin precursor according to any one of claims 1 to 6; and
an organic solvent.

8. The varnish according to claim 7, wherein the organic solvent includes at least one selected from the group consisting of 1,3-dimethyl-2-imidazolidinone, N-methyl-2-pyrrolidone, and γ-butyrolactone.

9. A polyimide film obtained by applying the varnish according to claim 7 or 8 onto a support and heating the varnish.

10. A polyimide resin comprising:
a structural unit AI derived from a tetracarboxylic dianhydride; and
a structural unit BI derived from a diamine,
wherein the structural unit AI includes a structural unit (AI1) derived from a compound represented by Formula (a1), and
the structural unit BI includes at least one selected from the group consisting of a structural unit (BI1) derived from a compound represented by Formula (b1), a structural unit (BI2) derived from a compound represented by Formula (b2), and a structural unit (BI3) derived from a compound represented by Formula (b3):

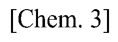

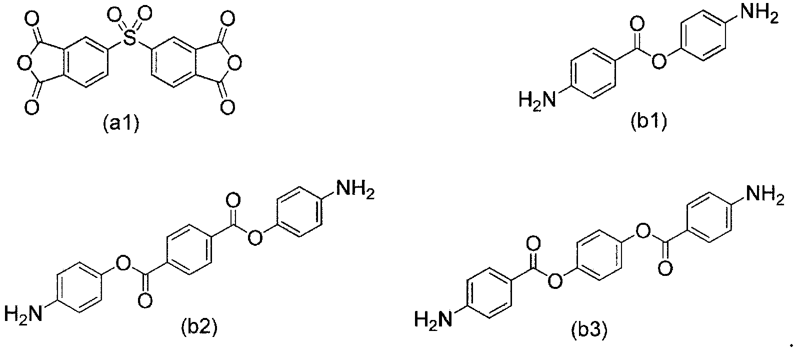

11. The polyimide resin according to claim 10, wherein a proportion of the structural unit (AI1) in the structural unit AI is from 30 to 100 mol%.

12. The polyimide resin according to claim 10 or 11, wherein a total of a proportion of the structural unit (BI1), a proportion of the structural unit (BI2), and a proportion of the structural unit (BI3) in the structural unit BI is from 30 to 100 mol%.

13. The polyimide resin according to any one of claims 10 to 12, wherein the structural unit AI further includes at least one selected from the group consisting of a structural unit (AI3) derived from a compound represented by Formula (a3) and a structural unit (AI4) derived from a compound represented by Formula (a4):

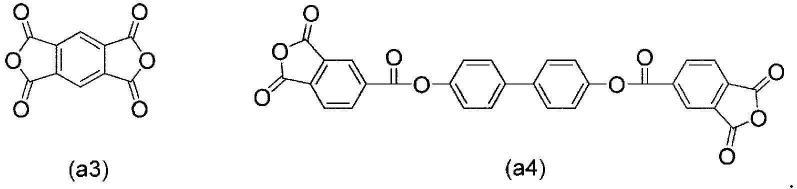

14. The polyimide resin according to any one of claims 10 to 13, wherein a molar ratio [(AI1)/((AI3) + (AI4))] of the structural unit (AI1) and a total of the structural unit (AI3) and the structural unit (AI4) in the structural unit AI is from 30/70 to 100/0.

15. A polyimide film comprising the polyimide resin according to any one of claims 10 to 14.
